# NOUVEAU FASCICULE DE BREVET EUROPEEN

(11) **EP 2 983 478 B2**
(45) Date de publication et mention de la décision concernant l'opposition: **16.11.2022**
(45) Mention de la délivrance du brevet: 21.08.2019
(21) Numéro de dépôt: 14711202.3
(22) Date de dépôt: 14.03.2014
(51) Int. Cl.: A21D 13/066, A21D 13/06, A23D 7/005, A23L 3/3463, A23L 3/46, A21D 2/16, A21D 2/18, A21D 13/068, A23P 10/20, A23P 10/22, A23P 10/40, A23L 29/212, A23L 33/20, A23L 17/10, A23L 17/60, A23L 35/00, A21D 13/40, A21D 2/36, A21D 13/062, A21D 13/16

(54) **UTILISATION DE FARINE DE MICROALGUES POUR LA PRÉPARATION DE PRODUITS CUITS**
VERWENDUNG VON MIKROALGENMEHL ZUR HERSTELLUNG VON BACKWAREN
USE OF MICROALGAL FLOUR FOR THE PREPARATION OF BAKED PRODUCTS

(30) Priorité: 15.03.2013 EP 13159385; 21.06.2013 FR 1355895
(43) Date de publication de la demande: 17.02.2016
(73) Titulaire: Corbion Biotech, Inc., South San Francisco, CA 94080 (US)
(72) Inventeur: LEROUX, Patrick, F-59940 Estaires (FR); DELEBARRE, Marie, F-62136 La Couture (FR); BOURSIER, Thomas, F-59370 Mons En Baroeul (FR)
(74) Mandataire: Cabinet Becker et Associés
(86) Numéro de dépôt international: PCT/EP2014/055063
(87) Numéro de publication internationale: WO 2014/140247

(56) Documents cités:
- EP-A1- 2 724 625
- EP-A1- 2 777 400
- EP-A1- 2 908 661
- EP-A1- 2 911 527
- EP-A1- 2 983 479
- EP-A2- 0 622 027
- WO-A1-2010/100368
- WO-A1-2010/100369
- WO-A1-2010/120923
- WO-A1-2010/120923
- WO-A1-2014/062882
- US-A1- 2011 025 682
- US-A1- 2011 256 282
- DATABASE WPI Week 1978 Thomson Scientific, London, GB; AN 1978-43554A XP002724795, & SU 567 432 A1 5 août 1977 (1977-08-05)
- FOOD NAVIGATOR 2015
- FILTERMAT
- US 14/777,751 Office Action
- PROLAC
- FOOD INDUSTRY MANUAL, 1997, BLACKIE ACADEMIC & PROFESSIONAL
- INDUSTIRIAL DRYING FOOD, 1997,BLACKIE ACADEMIC & PROFESSIONAL
- FOOD MATERIAL SCIENCE, Principles and Practice, 2008, SPRINGER
- CREQUE DE MORAIS & AL., BioMed Research International, vol. 2015, 1-15
- AZAMAN & AL (2017), Peer J, DOI10.7717/peerj.3473
- PETIT & AL., IDUSTRIES ALIMENTAIRESET AGRICOLES, NOV-DEC 2017,26-30
- Supplemental data

## Description

### DOMAINE DE L'INVENTION

La présente invention concerne l'utilisation d'une farine de microalgues sous forme de granules pour la préparation d'un produit cuit, de préférence un produit de panification.

### ARRIERE-PLAN TECHNOLOGIQUE

Le pain, et de façon plus générale les produits de panification, sont le résultat de transformations physiques, de réactions chimiques et d'activités biologiques très complexes qui se produisent au sein d'un mélange de farine issue de céréales panifiables, d'eau, de sel et de levure, et parfois d'autres ingrédients (acide ascorbique, farine d'autres origines, enzymes exogènes, émulsifiants...), sous l'action d'un apport contrôlé d'énergie mécanique et thermique.

La formulation diffère avec les types de pain. Le pain traditionnel est exempt de sucre, de lait et de matières grasses. Le pain viennois contient, en plus des ingrédients retrouvés dans le pain traditionnel, du sucre, des matières grasses, de la poudre de lait mais ne contient pas d'oeufs. Le pain de mie, quant à lui, contient les mêmes ingrédients que le pain viennois mais dans des proportions différentes avec la présence optionnelle de poudre de lait. Le pain au lait et le pain brioché contiennent tous les ingrédients cités ci-dessus avec en plus présence d'oeufs mais dans des proportions différentes.

Ainsi les produits de panification plus complexes peuvent contenir des oeufs, du lait, du beurre, en plus des ingrédients traditionnels.

Ces ingrédients sont connus pour certains comme étant allergènes et peuvent entrainer des réactions très gênantes, voire même dangereuse au quotidien. Les allergies alimentaires sont en constante progression. Elles sont passées de 1% en 1970 à 6 à 8% de la population aujourd'hui. Ce type d'allergies concerne plus volontiers les enfants en bas âge (7 à 8% sont ainsi concernés), alors que le pourcentage des adultes varie de 3 à 4%. De plus, le nombre de cas d'allergies sévères a également tendance à augmenter. Ainsi, de plus en plus de chocs anaphylactiques liés directement à la consommation de produits alimentaires allergènes a progressé de 700% en 17 ans !

L'allergie aux produits laitiers est une des réactions allergiques les plus répandues. Les études démontrent que 65 % des personnes qui souffrent d'allergies alimentaires sont allergiques au lait. La forme adulte de l'allergie au lait, appelée ici «allergie aux produits laitiers», est une réaction du système immunitaire qui crée des anticorps pour combattre l'aliment indésirable. Cette allergie est différente de l'allergie aux protéines du lait de vache (protéines bovines), également appelée l'APLV, qui touche les nouveau-nés et les enfants. Les manifestations cliniques de cette allergie sont principalement gastro-alimentaires (50 à 80% des cas), également cutanées (10 à 39% des cas) et respiratoires (19% des cas). Cette allergie est la première allergie alimentaire à apparaître chez l'enfant, et débute le plus souvent chez le nourrisson âgé de moins d'un an. L'APLV cause des symptômes variés tels que urticaire, eczéma, angio-oedème pouvant toucher le visage, les lèvres, la langue, la voile du palais, le larynx et les cordes vocales dans le formes graves, constipation, diarrhée, flatulences, nausées, migraines, infections, crampes abdominales, congestion nasale et même de graves crises d'asthme. L'APLV peut également se manifester par un choc anaphylactique et aussi par un syndrome dit de « rescapé de mort subite », et des observations de mort subite du nouveau-né liées à une anaphylaxie au lait de vache ont même été rapportées.

Les personnes allergiques doivent complètement éliminer le lait, les produits laitiers et leurs dérivés de leur alimentation. De plus, les laits d'autres espèces animales sont contre-indiqués en cas d'APLV. Les termes suivants sont des indicateurs de présence de lait de vache ou de ses dérivés dans les ingrédients d'un produit : babeurre, caséinate de calcium, caséinate de sodium, caséine, caséinate, caséine hydrolysée, solides de lait séchés, lactalbumine, lactose, lactoglobuline, lait maigre, poudre de lait, lait condensé sucré et petit lait.

Pourtant le lait est devenu un aliment pivot de la nutrition humaine. Le lait est un aliment qui contient une source de protéines non négligeables et de haute qualité biologique. Les protéines représentent, après les glucides et les lipides, la troisième grande source énergétique de notre alimentation. Elles sont nécessaires à notre survie et sont fournies aussi bien par des produits d'origine animale (viandes, poissons, oeufs, produits laitiers) que par des aliments végétaux (céréales, légumineuses,..). Pendant longtemps, les protéines animales ont été plébiscitées pour leurs excellentes qualités nutritionnelles car elles contiennent tous les acides aminés essentiels en proportions adéquates. En revanche, aucune des différentes sources de protéines végétales ne peut à elle seule couvrir tous les besoins en acides aminés : il y a souvent un ou plusieurs acides aminés essentiels manquants.

Parmi les autres allergies alimentaires répandues, l'allergie aux oeufs occupe également une place importante. Les allergènes majeurs de l'oeuf sont l'albumine (protéine thermolabile détruite par la chaleur) et l'ovomucoïde (protéine thermostable résistante à la chaleur). Dans ce dernier cas, la cuisson de l'oeuf ne protège pas contre l'allergie.

Une allergie aux oeufs se produit habituellement durant la première année de la vie, lorsque les oeufs sont, pour la première fois, ajoutés au régime alimentaire d'un bébé. Bien que l'allergie aux oeufs disparaisse généralement vers l'âge de 5 ou 7 ans, elle s'installe chez certains pour la vie. Il est alors primordial d'apprendre à la côtoyer tout en éliminant ses dangers. L'allergie aux oeufs représente 30% des allergies alimentaires de l'enfant.

Elle est causée par la réaction du système immunitaire à l'ingestion de la protéine de l'oeuf. Pour qu'une allergie alimentaire survienne, deux facteurs doivent être présents, soit une prédisposition génétique et un contact avec l'aliment. La gravité de la réaction allergique peut être bénigne ou mettre en danger la vie de la personne qui en est atteinte, selon l'individu et la quantité d'oeuf consommée. Et quoique le blanc d'oeuf entraîne une réaction plus grave que le jaune, les personnes allergiques doivent éviter l'aliment en son entier. Séparer parfaitement le jaune du blanc est pratiquement impossible. Et il suffit d'une toute petite quantité de la protéine allergène pour provoquer une importante réaction allergique.

Les symptômes surviennent généralement quelques minutes seulement après que l'oeuf a été consommé. Cependant, il est également possible que des réactions apparaissent de 2 à 4 heures après l'ingestion. Les symptômes les plus courants sont des nausées, vomissements, crampes, diarrhées, sensation de picotement dans la bouche, éruptions cutanées et rougeurs, démangeaisons, urticaire, eczéma, écoulement nasal, éternuement, difficulté à respirer, toux, respiration sifflante, yeux irrités et larmoyants. Un choc anaphylactique peut s'observer dans de très rares cas.

Les oeufs figurent parmi les aliments les plus sains. Ils contiennent des protéines de qualité de même que des vitamines essentielles et des minéraux, dont l'acide folique, la vitamine B12, le zinc, le fer et le phosphore. L'élimination des oeufs d'un régime alimentaire réduit considérablement les possibilités de choix de repas et empêche de bénéficier des nombreux avantages alimentaires qu'ils fournissent.

Ainsi, les personnes souffrant d'allergies alimentaires aux protéines de lait et/ou aux oeufs sont à la recherche de produits totalement dépourvus de ces allergènes.

De plus les végétariens et végétaliens refusent également de consommer tous produits issus d'animaux et boycottent par conséquent tous les produits alimentaires en contenant.

Enfin, certaines personnes soucieuses de leur ligne et de leur santé veulent consommer des produits réduits en matière grasse, en cholestérol et dont la charge calorique est réduite.

De très nombreux travaux de recherche ont été menés afin de proposer des solutions plus ou moins complexes pour formuler des produits de panification non allergènes et pouvant également être consommés par les personnes végétaliennes et/ou végétariennes et/ou soucieuses de leur ligne et de leur santé.

On connait en particulier la demande US2010/0297296 dans laquelle il est présenté des produits de panifications dits sains et contenant des microalgues en remplacement total ou partiel des oeufs et/ou du beurre présents dans les recettes de base. Par contre, à aucun moment, ce document ne présente des recettes permettant de substituer les protéines laitières.

La demande WO 2013/049337 divulgue également des préparations pour préparer des produits de panification cuits comprenant de la farine, un agent levant un composé gras solide ou semi-solide et un liquide carbonaté choisi parmi les « sodas clubs », l'eau gazéifiée, l'eau de Seltz, les boissons contenant des édulcorants artificiels et les boissons sucrées. Par contre, les préparations divulguées dans ce document contiennent quand même encore des oeufs ou ovoproduits et/ou du lait ou produits dérivés du lait.

La demande WO2010/120923 divulgue une composition alimentaire comprenant une farine d'algues séchée par atomisation avec une technologie commune.

La demande US2011/256282 concerne des compositions alimentaires à base de farine de microalgues riches en lipides. La farine de microalgues est séchée par pulvérisation selon une technologie classique.

Les documents WO2010/100368 et WO2010/100369 décrivent une poudre granulée comprenant une protéine végétale et soit une fibre végétale soit un hydrolysat d'amidon.

Le document EP0622027 concerne un produit dans leguel les cellules de microalgues sont intactes.

Par contre, les solutions connues de l'art antérieur conduisent très souvent à des produits présentant une qualité finale moindre, notamment en termes de texture et de goût.

Il existait donc un réel besoin pour remplacer les ingrédients allergènes et/ou les matières grasses d'origine animale dans des produits de panification de façon à en permettre la consommation par les personnes allergiques, végétariennes, végétaliennes et toutes celles soucieuses de leur ligne, de leur forme et de leur santé. Les solutions proposées doivent résulter dans des produits présentant les mêmes qualités organoleptiques que les produits dits traditionnels. Par ailleurs, les solutions proposées doivent pouvoir être mises en oeuvre par les hommes du métier sans changement drastique des recettes et de préférence à grandes échelles.

### RESUME DE L'INVENTION

Forte de ce constat et après de nombreux travaux de recherche, la société Demanderesse a eu le mérite de répondre à toutes les exigences requises et a trouvé qu'un tel but pouvait être atteint dès lors que l'on utilise une farine de microalgues en tant qu'ingrédient dans des produits de panification destinés à être cuits avant leur consommation. Il est donc du mérite de la Demanderesse d'avoir découvert qu'une farine de microalgues pouvait, de façon surprenante et inattendue par rapport aux prérequis de l'art antérieur, remplacer avantageusement les oeufs ou ovoproduits, le lait ou produits dérivés du lait et les matières grasses d'origine animale et/ou végétale dans des produits de panification, tout en conservant des qualités organoleptiques, en particulier gustatives, olfactives, visuelles et tactiles, au moins équivalentes voire supérieures, à celles des produits de cuisson traditionnels contenant ces ingrédients

Un autre problème technique à résoudre relevait de la teneur des farines de microalgues en lipide. En effet, cette teneur étant au minimum de 10%, 25% voire 50 % en poids de la poudre sèche, on déplore généralement l'obtention d'une poudre sèche d'aspect collante, qui s'écoule difficilement. Différents agents d'écoulement (y compris les produits dérivés de la silice) doivent alors être ajoutés. Il peut être également rencontré des problèmes de dispersibilité dans l'eau des farines de biomasse séchées, présentant alors de moins bonnes propriétés de mouillabilité.

Il existait donc encore un besoin non satisfait pour de nouvelles formes stabilisées de farine de microalgues riches en lipides et/ou en protéines, afin de permettre leur incorporation aisée, à grande échelle, dans des produits alimentaires qui doivent rester savoureux et nutritifs.

La société Demanderesse a donc trouvé que ce besoin pouvait être satisfait en proposant d'utiliser des granules de farine de microalgues présentant une distribution granulométrique particulière, des propriétés d'écoulement et de mouillabilité remarquables. Ainsi, la farine de microalgues comprend des cellules au moins partiellement lysées, sous forme de granules possédant les trois caractéristiques suivantes :
- une distribution granulométrique monomodale, mesurée sur un granulomètre laser LS de marque COULTER^{®}, comprise entre 2 et 400 µm, centrée sur un diamètre de particules (D mode) entre 5 et 15µm,
- des notes d'écoulement, déterminées selon un test A, comprises entre 0,5 et 60 % en poids pour le refus à 2.000 µm, comprises entre 0,5 et 60 % en poids pour le refus à 1.400 µm et comprises entre et 0,5 et 95 % en poids pour le refus à 800 µm, et
- un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm.

De préférence, la teneur en farine de microalgues du produit de cuisson est comprise entre 0,1 et 40%, plus préférentiellement entre 0,5% et 25% et encore plus préférentiellement entre 1 et 10% de la masse totale des ingrédients mis en oeuvre dans la recette de préparation dudit produit de cuisson.

Dans un premier mode de réalisation préféré, le produit de cuisson est caractérisé en ce qu'au moins un des trois ingrédients choisi parmi les oeufs ou ovoproduits, le lait ou dérivés du lait et les matières grasses d'origine animale et/ou végétale a été remplacé partiellement ou totalement par de la farine de microalgues.

Dans un deuxième mode de réalisation préféré de l'invention, ledit produit de cuisson est caractérisé en ce qu'au moins deux des trois ingrédients choisi parmi les oeufs ou ovoproduits, le lait ou dérivés du lait et les matières grasses d'origine animale et/ou végétale ont été remplacés partiellement ou totalement par de la farine de microalgues.

Dans un troisième mode de réalisation de l'invention, le produit de cuisson est caractérisé en ce que tous les ingrédients choisi parmi les oeufs ou ovoproduits, le lait ou dérivés du lait et les matières grasses d'origine animale et/ou végétale ont été remplacés partiellement ou totalement par de la farine de microalgues.

Selon l'invention, le produit de cuisson peut être caractérisé en ce que la substitution des oeufs ou ovoproduits, du lait ou dérivés du lait et/ou des matières grasses d'origine animale et/ou végétale est totale.

Dans un aspect de l'invention, ledit produit de cuisson ne contient pas de gluten.

Selon l'invention, la farine de microalgues est de préférence une farine dans laquelle les microalgues sont du genre *Chlorella*, et plus particulièrement de l'espèce *Chlorella protothecoides.*

De préférence, la biomasse de microalgues contient au moins 12% ; au moins 25%, au moins 50%, ou au moins 75% en poids sec de lipides ; et/ou au moins 30% en poids sec de protéines, au moins 40%, ou au moins 45% en poids sec de protéines.

La farine de microalgues est sous la forme de cellules partiellement lysées et contient de 25% à 75% de cellules lysée.

Dans un mode de réalisation, la farine de microalgues est sous la forme de cellules fortement lysées et contient 85% ou plus de cellules lysée, de préférence 90% ou plus.

De préférence, le produit de cuisson est un produit de panification, en particulier une brioche.

La présente invention est relative à l'utilisation de la farine de microalgues sous forme de granules telle que définie dans le présent document pour la préparation d'un produit cuit, de préférence un produit de panification. En particulier, dans le contexte de cette utilisation, la farine de microalgues remplace totalement ou partiellement au moins un, deux ou trois des trois ingrédients choisis parmi les oeufs ou ovoproduits, le lait ou dérivés du lait et les matières grasses d'origine animale et/ou végétale.

Un procédé de préparation d'un produit de cuisson tel que défini dans le présent document est caractérisé en ce qu'il comprend les étapes suivantes :
- mélange des différents ingrédients jusqu'à l'obtention d'une pâte, et
- cuisson de ladite pâte.

De préférence, le procédé est caractérisé en ce que au moins un, deux ou trois des trois ingrédients choisis parmi les oeufs ou ovoproduits, le lait ou dérivés du lait et les matières grasses d'origine animale et/ou végétale est remplacé totalement ou partiellement par la farine de microalgues sous forme de granules telle que définie dans le présent document.

Est aussi décrit mais ne fait pas partie de l'invention un procédé de préparation de préparation des granules de farine de microalgues utilisés dans ledit produit de cuisson comprenant les étapes suivantes :
- 1) préparer une émulsion de farine de microalgues à une matière sèche comprise entre 15 et 40 % en poids sec,
- 2) introduire cette émulsion dans un homogénéisateur haute pression,
- 3) la pulvériser dans un atomiseur vertical équipé d'une bande mobile à sa base, et d'une buse haute pression à sa partie supérieure, tout en réglant :
   a) la pression appliquée au niveau des buses de pulvérisation à des valeurs de plus de 100 bars, de préférence entre 100 et de 200 bars, et de préférence encore entre 160 et 170 bars,
   b) la température d'entrée comprise entre 150°C et 250°C, de préférence entre 180°C et 200°C, et
   c) la température de sortie dans cette zone d'atomisation comprise entre 60°C et 120°C, de préférence entre 60°C et 110°C et de préférence encore entre 60°C et 80°C,
- 4) régler les températures d'entrée de la zone de séchage sur la bande mobile entre 40°C et 90°C, de préférence entre 60°C et 90°C, et la température de sortie entre 40°C et 80°C, et régler les températures d'entrée de la zone de refroidissement à une température entre 10°C et 40°C, de préférence entre 10°C et 25°C, et la température de sortie entre 20°C et 80°C, de préférence entre 20°C et 60°C,
- 5) collecter les granules de farine de microalgues ainsi obtenus.

### DESCRIPTION DETAILLEE DES MODES DE REALISATION

Un avantage de la présente invention est la capacité de de la farine de microalgues sous forme de granules comme définie dans le présent document à remplacer totalement ou partiellement les oeufs ou ovoproduits, le lait ou dérivés du lait et/ou les matières grasses d'origine animale et/ou végétale tout en conservant les qualités organoleptiques du produit de cuisson, voire en les améliorant. En outre, cette substitution peut être faite sans changement, tout du moins substantiel, des recettes de préparation des produits de cuisson.

Ainsi, dans un premier mode préférentiel de l'invention, le produit de cuisson est caractérisé en ce qu'au moins un des trois ingrédients choisi parmi les oeufs ou ovoproduits, le lait ou dérivés du lait et les matières grasses d'origine animale et/ou végétale a été remplacé partiellement ou totalement par de la farine de microalgues. Dans un mode de réalisation particulier, le lait ou dérivés du lait ont été remplacés partiellement ou totalement. Dans un autre mode de réalisation particulier, les oeufs ou ovoproduits ont été remplacés partiellement ou totalement. Dans un mode de réalisation particulier supplémentaire, les matières grasses d'origine animale et/ou végétale ont été remplacées partiellement ou totalement.

Par « totalement » est entendu que le produit de cuisson ne comprend pas les ingrédients remplacés, de préférence même à l'état de trace. Par « partiellement » est entendu que, en comparaison de la recette utilisée, la teneur en l'ingrédient remplacé est diminuée d'au moins 10, 20, 30, 40, 50, 60, 70, 80 ou 90 % en poids, par exemple d'environ 10, 20, 30, 40, 50, 60, 70, 80 ou 90 % en poids.

Par « environ » est entendu la valeur plus ou moins 10 % de celle-ci, de préférence plus ou moins 5 % de celle-ci. Par exemple, « environ 100 » signifie entre 90 et 110, de préférence entre 95 et 105.

Dans un deuxième mode préférentiel de l'invention, le produit de cuisson est caractérisé en ce qu'au moins deux des trois ingrédients choisi parmi les oeufs ou ovoproduits, le lait ou dérivés du lait et les matières grasses d'origine animale et/ou végétale ont été remplacés partiellement ou totalement par de la farine de microalgues. Dans un mode de réalisation particulier, le lait ou dérivés du lait et soit les oeufs ou ovoproduits, soit les matières grasses d'origine animale et/ou végétale, ont été remplacés partiellement ou totalement. Dans un autre mode de réalisation particulier, les oeufs ou ovoproduits et soit le lait ou dérivés du lait, soit les matières grasses d'origine animale et/ou végétale, ont été remplacés partiellement ou totalement. Dans un mode de réalisation particulier supplémentaire, les matières grasses d'origine animale et/ou végétale et soit le lait ou dérivés du lait, soit les oeufs ou ovoproduits, ont été remplacés partiellement ou totalement.

Dans un troisième mode de réalisation préférentiel de l'invention, le produit de cuisson est caractérisé en ce que tous les ingrédients choisi parmi les oeufs ou ovoproduits, le lait ou dérivés du lait et les matières grasses d'origine animale et/ou végétale ont été remplacés partiellement ou totalement par de la farine de microalgues.

Dans un mode de réalisation avantageux de l'invention, le produit de cuisson est caractérisé en ce que la substitution des oeufs ou ovoproduits, et/ou du lait ou dérivés du lait et/ou des matières grasses d'origine animale et/ou végétale est totale. Dans un mode de réalisation très particulier, le produit de cuisson est caractérisé en ce que la substitution des oeufs ou ovoproduits, du lait ou dérivés du lait et des matières grasses d'origine animale et/ou végétale est totale.

Ainsi dans certains modes de réalisation, ledit produit de cuisson ne contient plus aucun ingrédient allergène choisi parmi les oeufs ou ovoproduits, le lait ou dérivés du lait et/ou de matières grasses d'origine animale et/ou végétale, et peut ainsi être consommé par des personnes allergiques à ces ingrédients, végétariennes, végétaliennes et toutes celles soucieuses de leur ligne, de leur forme et de leur santé.

Dans la présente invention, les termes « produit de cuisson » et « produit de panification » ainsi que le terme « boulangerie » doivent être interprétés de manière large, comme se référant en général au domaine de la production de produits cuits au four à partir de pâtes fermentées à base d'amidon, ainsi qu'aux domaines de la boulangerie et de la viennoiserie.

Dans un mode préférentiel, la présente invention s'applique aux produits de cuisson qui contiennent tradition-nellement des oeufs ou ovoproduits, et/ou du lait ou dérivés du lait et/ou des matières grasses d'origine animale et/ou végétale. Il peut s'agir plus particulièrement de produits tels que les brioches, les pains au lait, les panettones.

En conséquence de la substitution, les produits de cuisson ont une charge calorique inférieure à celle des produits de cuisson conventionnels et/ou sont appropriés pour la consommation par des personnes souffrant d'allergies alimentaires à un ou plusieurs des ingrédients substitués ou par des personnes végétariennes, végétaliennes et toutes celles soucieuses de leur ligne, de leur forme et de leur santé.

Dans la présente invention, la farine utilisée pour la fabrication desdits produits de cuisson est sous la forme d'une poudre obtenue en broyant et en moulant des céréales. Elle désigne en général les farines de blé, c'est-à-dire les farines classiques de meunerie, de la farine blanche à la farine complète.

Dans un mode préféré de l'invention, la farine utilisée est une farine qui ne contient pas de gluten, et qui peut être notamment choisie parmi les farines de riz, de châtaigne, de lupin, de pois chiche, de sarrasin, de maïs, de quinoa, de coco, de souchet, de pépin de raisin, de millet, de chanvre et leurs mélanges quelconques.

Dans un autre mode de réalisation, la farine utilisée peut être obtenue à partir de matières premières contenant généralement du gluten mais ayant été rendues « exemptes de gluten » par des traitements spéciaux bien connus de l'homme du métier. Par exemple, le gluten peut être extrait des farines en contenant naturellement par la vage de l'amidon. La pâte obtenue est rincée et malaxée jusqu'à ce que l'eau de rinçage devienne claire et soit exempte d'amidon. Ainsi, la farine peut également être de toutes origines botaniques contenant du gluten, à condition de subir un procédé particulier d'élimination du gluten. Ainsi, les farines dérivées de blé (ou froment ou épeautre), d'orge, de seigle ou de triticale (blé + seigle) sont également utilisables, à condition qu'elles soient bien dénuées de gluten (gluten free) après les procédés d'extraction mis en oeuvre.

Ainsi, dans un mode de réalisation particulièrement avantageux de l'invention, le produit de cuisson ne contient pas de gluten.

Le gluten est un mélange de protéines combiné avec de l'amidon dans l'endosperme de la plupart des céréales. Il constitue environ 80% des protéines contenues dans le blé. Le gluten se divise en deux groupes : les prolamines (gliadines dans le blé), responsables de la maladie coeliaque et de l'intolérance très pernicieuses et les gluténines.

Dans la présente invention, le terme « oeufs ou ovoproduits » doit être compris dans son interprétation la plus large et comme désignant par exemple, et de manière non limitative, les oeufs entiers incluant ceux possédant une coquille blanche ou brune et de toute origine animale, tout comme les substituts d'oeufs incluant les dérivés d'oeufs comme par exemple et sans limitation les blancs d'oeufs (albumine), les jaunes d'oeuf, et pouvant être sous différentes formes, comme concentrée, congelée, poudreuse, liquide, atomisée...

En panification et boulangerie, les oeufs sont utilisés pour améliorer la saveur et la couleur des produits. Ils assouplissent également la pâte, grâce notamment à la lécithine qu'ils contiennent. Ils ont également un rôle hydratant au niveau de la farine et créent l'humidité nécessaire à la fermentation de la pâte. Enfin, ils permettent d'augmenter le volume des produits finis. C'est grâce aux oeufs que l'on obtient des brioches avec un volume gonflé.

Dans la présente invention, le terme « lait ou dérivés du lait » doit être compris dans son interprétation la plus large et comme désignant par exemple, et de manière non limitative tout produit obtenu à la suite d'un traitement quelconque du lait, qui peut contenir des additifs alimentaires et autres ingrédients fonctionnellement nécessaires au traitement (définition du CODEX Alimentarius). Ce peuvent être par exemple des ingrédients laitiers fondamentaux comme des poudres de lait écrémé ou entier, des caséines et caséinates, des produits de produits de lactosérum comme les lactosérums doux ou acides, les protéines sériques, les perméats.

Au niveau légal, il n'existe qu'une définition claire datant de 1909 définissant le lait d'origine animale : « Le lait est le produit intégral de la traite totale et ininterrom pue d'une femelle laitière bien portante, bien nourrie et non surmenée. Il doit être recueilli proprement et ne pas contenir de colostrum. » La dénomination « lait » sans indication de l'espèce animale de provenance est, au niveau de la législation française, réservée au lait de vache. Tout lait provenant d'une femelle laitière autre que la vache doit être désigné parla dénomination « lait » suivie de l'indication de l'espèce animale dont il provient, par exemple « lait de chèvre », « lait de brebis », « lait d'ânesse », « lait de bufflonne », etc. Toutefois, au sens de la présente invention, le lait et les produits laitiers peuvent avoir pour origine n'importe quelle espèce animale.

En panification et boulangerie, le lait a une action bénéfique sur la pâte et un effet positif sur plusieurs phases de fabrication des produits. Il améliore la structure et l'hydratation des pâtes, favorise et régularise la fermentation, améliore la cuisson de la pâte et la saveur ainsi que la coloration des produits à la cuisson. Il apporte également du moelleux à la mie, et augmente la durée de conservation des produits finis. Le lait est le second élément liquide utilisé par le boulanger.

Le lait est également connu comme étant un agent gustatif. Il sucre légèrement les pâtes et adoucit les goûts et permet également de fixer les arômes. C'est un très bon agent de texture. Il donne de la souplesse aux pâtes.

Dans la présente invention, le terme « matière grasse d'origine animale et/ou végétale » doit être compris dans son interprétation la plus large et comme désignant par exemple, et de manière non limitative, tout produit choisi parmi les beurres, les margarines ou les huiles. Selon l'article 1er du Décret du 30/12/1988, la dénomination "beurre" est réservée au produit laitier de type émulsion d'eau dans la matière grasse, obtenu par des procédés physiques et dont les constituants sont d'origine laitière. Il doit représenter pour 100 g de produit fini, 82 g au minimum de matière grasse butyrique, 2 g au maximum de matière sèche non grasse et 16 g au maximum d'eau. Il résulte du barattage de la crème de lait, après maturation de celle-ci. Les beurres peuvent être secs ou gras. Un beurre sec est composé essentiellement de triglycérides renfermant des acides gras à haut point de fusion. Un beurre gras est composé essentiellement des triglycérides renfermant des acides gras à bas point de fusion. Les beurres peuvent également être fractionnés. Pour pallier les différences de plasticité du beurre selon la saison, les industriels ont amélioré le beurre en fractionnant la cristallisation des acides gras. L'intérêt pour le professionnel est évident. Il dispose non seulement toute l'année d'une matière première constante en termes de qualité, mais surtout spécialement adaptée à ses fabrications. L'autre modification réalisée par les industriels est la concentration. On enlève toute l'eau du beurre (16% dans un beurre frais). On obtient un beurre concentré, à 99% en moyenne de matière grasse, quise conserve très bien. Ce beurre concentré, qui peut être fractionné ou non, est toujours additionné dès safabrication d'un traceur afin de le distinguer du beurre frais, qui lui n'est pas concentré. Enfin, le beurre peut également être en poudre.

Selon le décret du 30/12/1988, la dénomination "margarine" est réservée au produit obtenu par le mélange de matière grasses et d'eau ou de lait ou de dérivés du lait, se présentant sous la forme d'une émulsion renfermant au moins 82% de matière grasse dont au plus 10% d'origine laitière. Cela dit, le plus fréquemment, la margarine est une émulsion huile dans eau complétée des adjuvants de type lécithine de soja.

Selon la présente invention, la matière grasse d'origine végétale désigne également les huiles. Élaborées principalement à partir de plantes oléagineuses, les huiles végétales sont les premiers corps gras consommés dans le monde. On distingue 2 types d'huiles: les huiles fluides extraites principalement de l'olive, d'arachide, de tournesol, de soja, de colza et de germe de maïs qui ont la particularité de rester liquide à 15°C ; et les huiles concrètes extraites à partir de palme, de palmiste et de coprah (noix de coco) qui sont par contre figées et solides à 15°C.

Dans un mode préférentiel de la présente invention, la matière grasse d'origine animale et/ou végétale désigne le beurre.

En panification et boulangerie, les matières grasses d'origine animale et/ou végétale ont un rôle important. Elles facilitent le façonnage et l'assouplissement des pâtes. Elles améliorent le pouvoir de rétention gazeuse pour un meilleur développement. Elles facilitent la cuisson grâce à leur bonne conductibilité thermique. Elles participent à la coloration de la mie et de la croûte. Elles permettent d'obtenir une croûte plus fine et une mie plus fondante. Elles ont également une influence sur le goût et enfin améliorent la conservation des produits finis.

Selon la présente invention, la farine de microalgues utilisée permet une substitution partielle ou totale des oeufs ou ovoproduits, et/ou du lait ou dérivés du lait et/ou des matières grasses d'origine animale et/ou végétale dans les produits de cuisson.

Selon un mode préférentiel de la présente invention, la substitution est totale.

La Demanderesse a en effet trouvé que, de manière tout à fait surprenante, la farine de microalgues utilisée selon la présente invention permet de substituer en partie ou en totalité des ingrédients aussi différents que les oeufs, le lait et le beurre dans un produit de cuisson, tout en permettant d'obtenir un produit présentant des caractéristiques organo-leptiques finales en tous points identiques au produit de cuisson classique qui contiendrait ces trois ingrédients. Aucune modification majeure des propriétés fonctionnelles, sensorielles et organoleptiques des produits de cuisson n'est à noter.

Lorsqu'on connait le rôle différent de chaque ingrédient substitué, la présente invention prend tout son sens en termes de prouesses techniques et technologiques. Qui plus est, les produits de cuisson concernés peuvent être réalisés dans les conditions habituelles de fabrication.

Aucune modification des procédés de fabrication n'est nécessaire, ce qui constitue un avantage majeur pour le boulanger et/ou l'industriel de la boulangerie.

Les algues font partie des premiers organismes apparus sur Terre, et sont définies comme des organismes eucaryotes dépourvus de racines, de tige et de feuille, mais possédant de la chlorophylle ainsi que d'autres pigments accessoires à la photosynthèse productrice d'oxygène. Elles sont bleues, rouges, jaunes, doré et brun ou encore vertes. Elles représentent plus de 90% des végétaux marins et 18% du règne végétal, avec leurs 40 000 à 45 000 espèces. Les algues sont des organismes extrêmement variés tant par leur taille et leur forme que par leur structure cellulaire. Elles vivent en milieu aquatique ou très humide. Elles contiennent de nombreuses vitamines et oligo-éléments, et sont de véritables concentrés d'actifs stimulants et bienfaisants pour la santé et la beauté. Elles ont des vertus anti-inflammatoires, hydratantes, adoucissantes, régénérantes, raffermissantes, anti-âge. Elles possèdent également des caractéristiques "technologiques" qui permettent d'apporter de la texture à un produit alimentaire. En effet, les fameux additifs E400 à E407 ne sont en fait que des composés extraits d'algues, dont on utilise les propriétés épaississantes, gélifiantes, émulsifiantes et stabilisantes.

Parmi les algues, on peut distinguer les macroalgues et les microalgues, notamment algues microscopiques unicellulaires, photosynthétiques ou non, d'origine marine ou non, cultivées notamment pour leurs applications en Bio-carburant ou dans le domaine alimentaire. Par exemple, la spiruline (*Arthrospira platensis*) est cultivée dans des lagunes ouvertes (en phototrophie) pour une utilisation comme complément alimentaire ou incorporée en petites quantités dans des confiseries ou des boissons (généralement moins de 0,5 % p/p). D'autres microalgues riches en lipides, y compris certaines espèces de *Chlorella*, sont également très populaires dans les pays asiatiques comme compléments alimentaires (citons les microalgues du genre *Crypthecodinium* ou *Schizochytrium*). La production et l'utilisation de farines de microalgues est décrite dans les demandes WO 2010/120923 et WO 2010/045368.

Au sens de la présente invention, le terme « farine de microalgues » doit être compris dans son interprétation la plus large et comme désignant par exemple, une composition comprenant une pluralité de particules de biomasse de microalgues. La biomasse de microalgues est dérivée de cellules de microalgues, qui peuvent être entières ou cassées, ou un mélange de cellules entières et cassées.

La fraction lipidique de la farine de microalgues, qui peut se composer essentiellement d'huiles monoinsaturées, fournit ainsi des avantages nutritionnels et de santé par rapport aux huiles saturées, hydrogénées et polyinsaturées souvent trouvées dans les produits alimentaires conventionnels.

La fraction protéique de la farine de microalgues qui renferme beaucoup d'acides aminés essentiels au bien-être humain et animal fournit donc également des avantages nutritionnels et de santé intéressants et non négligeables.

Au sens de l'invention, les microalgues considérées sont les espèces qui produisent des huiles appropriées et / ou des lipides et / ou des protéines.

Selon l'invention, la biomasse de microalgues comprend au moins 10% en poids sec de lipides, de préférence au moins 12% et encore plus préférentiellement de 25 à 35% ou plus en poids sec de lipides.

Ainsi, selon la présente invention, l'expression « riche en lipides » doit être interprétée comme se référant à des teneurs d'au moins 10% en poids sec de lipides, de préférence d'au moins 12% en poids sec de lipides et encore plus préférentiellement des teneurs d'au moins 25 à 35% ou plus en poids sec de lipides.

Selon un mode préférentiel de l'invention, la biomasse de microalgues contient au moins 12% ; au moins 25%, au moins 50%, ou au moins 75% en poids sec de lipides.

Selon un autre mode de réalisation de l'invention, la biomasse de microalgues contient au moins 30% en poids sec de protéines, au moins 40%, ou au moins 45% en poids sec de protéines.

Ainsi, selon l'ingrédient à remplacer et selon sa classe, notamment qu'il soit de nature protidique ou plutôt de nature grasse, le boulanger pourra choisir d'incorporer à sa recette de produit de cuisson plutôt une farine de microalgues présentant une teneur élevée en lipides ou plutôt une farine de microalgues algues présentant une teneur élevée en protéines, une farine de microalgues algues présentant à la fois une teneur élevée en lipides et protéines, ou encore un mélange des deux types de farines de microalgues.

Selon un autre mode préférentiel de l'invention, les microalgues appartiennent au genre *Chlorella.*

La chlorelle (ou *Chlorella*) est une algue unicellulaire verte microscopique ou microalgue d'eau douce apparue sur la terre depuis plus de 3 milliards d'années, appartenant à l'embranchement des Chlorophytes. La chlorelle possède la plus grande concentration en chlorophylle de tous les végétaux, et sa capacité à la photosynthèse est considérable. Depuis sa découverte, la chlorelle n'a cessé de générer un intérêt considérable dans le monde, et aujourd'hui elle est produite à grande échelle pour des utilisations dans des compléments alimentaires et nutritionnels. En effet, la chlorelle contient plus de 60% de protéines qui renferment beaucoup d'acides aminés essentiels au bien-être humain et animal. La chlorelle contient également beaucoup de vitamines (A, Bêta carotène, B1 : thiamine, B2 : riboflavine, B3 : niacine, B5 : acide pantothénique, B6 : pyridoxine, B9 : acide folique, B12 : cobalamine, vitamine C : acide ascorbique, vitamine E : tocophérol, vitamine K : phylloquinone), de lutéine (famille des caroténoïdes, puissant antioxydant), et de minéraux dont le calcium, le fer, le phosphore, le manganèse, le potassium, le cuivre et le zinc. En outre, la chlorelle contient certains acides gras polyinsaturés de type oméga indispensables au bon fonctionnement cardiaque et cérébral et à la prévention de nombreuses maladies comme le cancer, le diabète ou l'obésité.

Les bienfaits rapportés à la consommation de chlorelle sont très nombreux. C'est un complément alimentaire utilisé quotidiennement au Japon par 4 millions de personnes. A tel point que le gouvernement japonais l'a classée comme « aliment d'intérêt national ».

Facultativement, les microalgues utilisées peuvent être choisies, et manière non-exhaustive, parmi les *Chlorella protothecoides, Chlorella kessleri, Chlorella minutissima, Chlorella sp., Chlorella sorokiniama, Chlorella luteoviridis, Chlorella vulgaris, Chlorella reisiglii, Chlorella ellipsoidea, Chlorella saccarophila, Parachlorella kessleri, Parachlorella beijerinkii, Prototheca stagnora* et *Prototheca moriformis.* De manière préférée, les microalgues utilisées selon l'invention appartiennent à l'espèce *Chlorella protothecoides.* Dans le cadre de l'invention, *Chlorella protothecoides* est choisie en raison de sa composition élevée en lipides. Dans un mode de réalisation secondaire, *Chlorella protothecoides* est également choisie en raison de sa composition élevée en protéines.

Dans la farine de microalgues, les parois cellulaires des microalgues et/ou les débris cellulaires de ces dernières peuvent optionnellement encapsuler les lipides au moins jusqu'à ce que le produit alimentaire la contenant soit cuit, ce qui augmente la durée de vie des lipides.

La farine de microalgues fournit également d'autres bénéfices, comme des micronutriments, des fibres alimentaires (glucides solubles et insolubles), des phospholipides, des glycoprotéines, des phytostérols, tocophérols, tocotriénols, et du sélénium.

Selon un mode de réalisation de l'invention, les microalgues peuvent être modifiées de manière à réduire la production de pigments, voire à l'inhiber totalement. Par exemple, *Chlorella protothecoides* peut être modifiée par mutagenèses par UV et/ou chimique de manière à être réduite ou dénuée en pigments.

Il peut en effet être particulièrement intéressant d'avoir des microalgues dépourvues de pigment de façon à éviter l'obtention d'une couleur verte plus ou moins marquée dans les produits de cuisson dans lesquels la farine de microalgues est employée.

Comme les microalgues sont destinées à la production de farine destinées à des formulations alimentaires, selon un mode préféré de réalisation de l'invention, les microalgues ne subissent aucune modification génétique comme par exemple mutagénèse, transgénèse, génie génétique et/ou chimique. Ainsi, les microalgues n'ont pas subi de modifications de leur génome par quelque technique de biologie moléculaire que ce soit.

Selon ce mode préféré, les algues destinées à la production de la farine de microalgues possèdent le statut GRAS. Le concept GRAS (Generally Recognized As Safe) créé en 1958 par la Food and Drug Administration (FDA) permet la régulation de substances ou extraits ajoutés aux aliments et qui sont considérés comme sans danger par un panel d'expert.

Les conditions appropriées de culture à utiliser sont notamment décrites dans l'article d'Ikuro Shihira-lshikawa et Eiji Hase, « Nutritional Control of Cell Pigmentation in Chlorella protothecoides with special reference to the degen-eration of chloroplast induced by glucose », Plant and Cell Physiology, 5, 1964.

Cet article décrit notamment que tous les grades de couleur peuvent être produits par *Chlorella protothecoides* (incolore, jaune, vert jaunâtre et vert), en faisant varier les sources et les ratios d'azote et de carbone. En particulier, des cellules « délavées » et « incolores » sont obtenues en utilisant des milieux de culture riches en glucose et pauvres en azote. La distinction entre cellules incolores et cellules jaunes est faite dans cet article. De plus, les cellules délavées cultivées en excès de glucose et en azote limité possèdent de fort taux de croissance. De plus, ces cellules contiennent de fortes quantités de lipides.

D'autres articles, tel que celui de Han Xu, Xiaoling Miao, Qingyu Wu , « High quality biodiesel production from a microalga Chlorella protothecoides by heterotrophic growth in fermenters », Journal of Biotechnoloy, 126, (2006), 499-507 décrivent que des conditions de culture hétérotrophiques, c'est-à-dire en absence de lumière permettent d'obtenir une biomasse élevée avec une teneur élevée en lipides dans les cellules de microalgues.

Les milieux de croissance solides et liquides sont généralement disponibles dans la littérature, et les recommandations pour la préparation des milieux particuliers qui conviennent à une grande variété de souches de microor-ganismes peuvent être trouvées, par exemple, en ligne à www.utex.org/, un site maintenu par l'Université du Texas à Austin pour sa collection de culture d'algues (UTEX).

Au vu de ses connaissances générales et de l'état de l'art précité, l'homme du métier chargé de cultiver les cellules de microalgues sera tout à fait capable d'adapter les conditions de culture afin d'obtenir une biomasse nombreuse, riche en protéines et/ou en lipides et dépourvue soit en totalité soit de façon atténuée de pigments chlorophylliens.

Les microalgues sont cultivées en milieu liquide pour produire la biomasse en tant que telle.

Les microalgues sont cultivées dans un milieu contenant une source de carbone et une source d'azote, soit en présence de lumière, soit en absence de lumière.

Selon un mode préféré, les microalgues sont cultivées dans un milieu contenant une source de carbone et une source d'azote en absence de lumière (conditions hétérotrophiques).

La production de biomasse est réalisée en fermenteurs (ou bioréacteurs). Les exemples spécifiques de bioréacteurs, les conditions de culture, et la croissance hétérotrophe et les méthodes de propagation peuvent être combinés de toute manière appropriée pour améliorer l'efficacité de la croissance microbienne et des lipides et / ou de production de protéines. Pour préparer la biomasse pour une utilisation dans des compositions alimentaires, la biomasse obtenue en fin de fermentation est concentrée ou récoltée, du milieu de fermentation. Au moment de la récolte de la biomasse de microalgues du milieu de fermentation, la biomasse comprend des cellules intactes pour l'essentiel en suspension dans un milieu de culture aqueux.

Pour concentrer la biomasse, on procède alors à une étape de séparation solide-liquide, par filtration, par centrifugation, ou par tout moyen connu par ailleurs de l'homme du métier. Après concentration, la biomasse de microalgues peut être traitée afin de produire des gâteaux emballés sous vide, des paillettes d'algues, des homogénats d'algues, de la poudre d'algues, de la farine d'algues, ou de l'huile d'algues.

On procède également au séchage de la biomasse de microalgues pour faciliter le traitement ultérieur ou pour une utilisation de la biomasse dans ses différentes applications, notamment alimentaires.

Différentes textures et saveurs peuvent être conférées à des produits alimentaires, selon que la biomasse algale est séchée, et si oui, en fonction de la méthode de séchage mise en oeuvre. Se référer aux brevets US 6.607.900 et US 6.372.460 pour des exemples.

La farine de microalgues peut être préparée à partir de la biomasse de microalgues concentrée qui a été mécaniquement lysée et homogénéisée, l'homogénat étant ensuite atomisé ou flash-séché.

Les cellules utilisées pour la production de farine de microalgues sont lysées pour libérer leur huile ou lipides. Les parois cellulaires et les composants intracellulaires sont broyés ou réduits, par exemple grâce à un homogénéisateur, en particules ou débris cellulaires non agglomérés. Selon un mode préférentiel de l'invention, les particules résultantes possèdent une taille moyenne inférieure à 500 µm, 100 µm ou même 10 µm ou moins.

Les cellules lysées peuvent également être séchées.

Par exemple, un disrupteur à pression peut être utilisé pour pomper une suspension contenant les cellules à travers un orifice restreint pour lyser les cellules. Une pression élevée (jusqu'à 1500 bars) est appliquée, suivie d'une expansion instantanée à travers une buse. Le cassage des cellules peut être réalisé par trois mécanismes différents : empiétement sur la vanne, cisaillement élevé du liquide dans l'orifice, et chute de pression soudaine en sortie, provoquant une explosion de la cellule.

La méthode libère des molécules intracellulaires.

Un homogénéisateur NIRO (GEA NIRO SOAVI) (ou tout autre homogénéisateur haute pression) peut être utilisé pour casser des cellules.

Ce traitement de la biomasse algale sous haute pression (environ 1500 bars) lyse généralement plus de 90 % des cellules et réduit la taille des particules à moins de 5 microns.

La pression appliquée est de 900 bars à 1200 bars. De manière préférentielle la pression appliquée est de 1100 bars.

Afin d'augmenter le pourcentage de cellules lysées, la biomasse de microalgues peut subir un double traitement à haute pression, voire plus (triple traitement, ..).

Selon un mode préféré, une double homogénéisation est utilisée afin d'augmenter le pourcentage de cellules lysées supérieur à 50%, supérieur à 75% ou supérieur à 90%. Le pourcentage de cellules lysées d'environ 95% a été observé grâce à ce double traitement.

Selon l'invention, une lyse partielle est souhaitée, c'est-à-dire que la farine de microalgues est sous la forme de cellules partiellement lysées et contient de 25% à 75% de cellules lysées. Selon un autre mode de réalisation de l'invention, une lyse maximale voire totale est souhaitée, c'est-à-dire que la farine de microalgues est sous la forme de cellules fortement voire totalement lysées et contient 85% ou plus des cellules lysées, de préférence 90% ou plus. Des exemples spécifiques portent sur des farines de microalgues présentant des taux de broyage de 50%, 85% ou 95 % de lyse des cellules, de préférence 85% ou 95 %.

De manière alternative, un broyeur à billes est plutôt utilisé. Dans ce type de broyeur, les cellules sont agitées en suspension avec de petites particules abrasives. Le cassage des cellules est provoqué par les forces de cisaillement, le broyage entre les billes, et les collisions avec des billes. En fait, ces billes cassent les cellules pour en libérer le contenu cellulaire. La description d'un broyeur à billes approprié est par exemple faite dans le brevet US 5.330.913. On obtient une suspension de particules, optionnellement de plus petite taille que les cellules d'origine sous la forme d'une émulsion « huile dans eau ». Cette émulsion peut ensuite être atomisée et l'eau est éliminée, laissant une poudre sèche contenant les débris cellulaires et les lipides. Après séchage, la teneur en eau ou l'humidité de la poudre est généralement inférieure à 10 %, préférentiellement inférieure à 5% et de façon plus préférée inférieure à 3% en poids.

Cependant, renfermant de l'huile à une teneur de 10%, 25% voire 50 % en poids de la poudre sèche, on peut déplorer l'obtention d'une poudre sèche d'aspect collante, qui s'écoule difficilement. Différents agents d'écoulement (y compris les produits dérivés de la silice) doivent alors être ajoutés. Il peut être également rencontré des problèmes de dispersibilité dans l'eau des farines de biomasse séchées, présentant alors de moins bonnes propriétés de mouillabilité.

La société Demanderesse a mis au point des granules de farine de microalgues présentant une distribution granulométrique particulière, des propriétés d'écoulement et de mouillabilité remarquables. Notamment, ces granules permettent de stabiliser la farine de microalgues, et de permettre leur incorporation aisée, à grande échelle, dans des produits alimentaires qui doivent rester savoureux et nutritifs.

Les granules de farine de microalgues, ne faisant pas partie de l'invention, sont ainsi caractérisés en ce qu'ils possèdent les trois caractéristiques suivantes :
- une distribution granulométrique monomodale, mesurée sur un granulomètre laser LS de marque COULTER^{®}, comprise entre 2 et 400 µm, centrée sur un diamètre de particules (D mode) entre 5 et 15µm,
- des notes d'écoulement, déterminées selon un test A, comprises entre 0,5 et 60 % en poids pour le refus à 2.000 µm, comprises entre 0,5 et 60 % en poids pour le refus à 1.400 µm et comprises entre et 0,5 et 95 % en poids pour le refus à 800 µm, et
- un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm.

Les granules de farine de microalgues peuvent être d'abord caractérisés par leur distribution granulométrique, et particulièrement sur leur diamètre de particule. Cette mesure est réalisée sur un granulomètre laser LS de marque COULTER^{®}, muni de son module de dispersion petit volume ou SVM (125 ml) en suivant les spécifications du constructeur (dans les « *Small Volume Module Operating instructions* »).

Les particules de farine de microalgues sont agglomérées durant leur préparation. Malgré cette agglomération, les granules de farine de microalgues présentent également des propriétés d'écoulement tout à fait satisfaisantes, selon un test A.

Ces propriétés d'écoulement confèrent de nombreux avantages dans la production de produits alimentaires utilisant la farine de microalgues. Par exemple, lors de la réalisation de produits alimentaires de nombreuses mesures précises de quantité de farine doivent être effectuées, et les aliquotes de farine sont souvent préparés de façon automatique. Il est donc indispensable que la farine et plus particulièrement la farine ne microalgues possède une bonne aptitude à l'écoulement, de façon à ne pas motter dans les systèmes automatisés industriels.

Le test A consiste à mesurer le degré de cohésion des granules de farine de microalgues.

Le test A consiste tout d'abord à tamiser les granules de farine de microalgues sur un tamis d'ouverture de maille de 800 µm. Les granules de farine présentant une taille inférieure à 800 µm sont ensuite récupérés, introduits dans un récipient fermé et subissent un mélange par mouvement épicycloïdal à l'aide d'un mélangeur de laboratoire de marque TURBULA type T2C. Par ce mélange, selon leurs propres caractéristiques, les granules de farine de microalgues exprimeront leurs propensions à s'agglomérer ou à se repousser.

Les granules ainsi mélangés sont ensuite déposés sur une colonne de 3 tamis (2000 µm ; 1400 µm ; 800 µm) pour un nouveau tamisage.

Le tamisage terminé, le refus sur chaque tamis est quantifié et le résultat donne une illustration du caractère « cohésif » ou « collant » des granules de farine de microalgues.

Ainsi, une poudre de granules à écoulement libre, donc peu cohésive, ne sera pratiquement pas arrêtée par les tamis de grande ouverture, mais le sera d'autant plus que les mailles desdits tamis seront resserrées.

Le protocole de mesure de la taille de particules selon le test A est le suivant :
- tamiser la quantité de produit nécessaire sur un tamis de 800 µm pour récupérer 50 g de produit de taille inférieure à 800 µm,
- introduire ces 50 g de granules de farine de taille inférieure à 800 µm dans un bocal en verre de contenance de 1 litre (Ref. BVBL Verrerie Villeurbannaise-Villeurbanne France) et refermer le couvercle,
- disposer ce bocal dans le mélangeur TURBULA modèle T2C réglé sur la vitesse de 42 t/mn (Willy A. Bachofen Sarl-Sausheim-France) et mélanger pendant 5 minutes,
- préparer une colonne de 3 tamis (de marque Saulas -Diamètre 200 mm ; Paisy Cosdon - France) qui seront placés sur un tamiseur de marque Fritsch modèle Pulverisette type 00.502 ; détail du montage en partant du bas vers le haut : tamiseur, fond de tamis, tamis de 800 µm, tamis de 1400 µm, tamis de 2000 µm, couvercle du tamiseur.
- déposer la poudre issue du mélange sur le haut de la colonne (tamis de 2000 µm), fermer avec le couvercle du tamiseur et tamiser pendant 5 minutes sur le tamiseur FRITSCH, avec une amplitude 5 en position permanente,
- peser le refus sur chaque tamis.

Les granules de farine de microalgues présentent alors :
- entre 0,5 et 60 % en poids pour le refus à 2.000 µm,
- entre 0,5 et 60 % en poids pour le refus à 1.400 µm, et
- entre 0,5 et 95 % en poids pour le refus à 800 µm.

A titre comparatif, les poudres de farine de microalgues préparées par des technologies de séchage classiques (atomisation simple effet) présentent quant à elles un aspect collant, de faible fluidité, ce qui se traduit par un comportement selon le test A :
- entre 50 et 90 % en poids de refus sur 2.000 µm
- entre 0,5 et 30 % en poids de refus sur 1.400 µm
- entre 5 et 40 % en poids de refus sur 800 µm.

En d'autres termes, une majorité de la poudre de farine de microalgues (plus de 50 % de la poudre) ne parvient pas à franchir le seuil des 2.000 µm, alors qu'initialement tamisée sur 800 µm.

Ces résultats démontrent que les technologies de séchage classiques conduisent plutôt à la fabrication de poudres très cohésives, puisqu'après mélange, mettant en oeuvre peu d'énergie mécanique (durée de tamisage d'à peine 5 mn), des particules inférieures à 800 µm ne parviennent pas à traverser un tamis de 2000 µm, d'une ouverture pourtant 2,5 fois plus grande. Il s'en déduit aisément qu'une poudre classique, présentant un tel comportement, n'est pas facile à mettre en oeuvre dans une préparation où une répartition homogène des ingrédients est recommandée.

Inversement, les farines de microalgues décrites ci-dessus sont plus faciles à mettre en oeuvre car elles sont moins collantes. Ce caractère collant moindre est évident au vu des nombreuses mesures incluant la petite taille des granules, la grande mouillabilité et l'écoulement amélioré.

Les granules de farine de microalgues ne présentent qu'un faible refus (< 50%) sur 2000 µm pour la famille de granules de fine granulométrie et quasiment aucun refus (5%) pour la famille de granules de grosse granulométrie. Il est donc démontré que les particules de farine de microalgues produites selon les méthodes décrites dans la présente invention sont moins collantes que les farines de microalgues préparées selon les méthodes conventionnelles décrites dans l'art antérieur.

Les granules de farine de microalgues sont enfin caractérisés par un degré de mouillabilité remarquable, selon un test B.

La mouillabilité est une propriété technologique très souvent utilisée pour caractériser une poudre remise en suspension dans l'eau, par exemple en industries laitières.

Elle traduit l'aptitude d'une poudre à s'immerger après avoir été déposée à la surface de l'eau (Haugaard Sorensen et al., « Méthodes d'analyse des produits laitiers déshydratés », Niro A/S (ed.), Copenhagen, Denmark, 1978), et reflète ainsi la capacité de la poudre à absorber de l'eau à sa surface (Cayot P. et Lorient D., « Structures et techno-fonctions des protéines du lait ». Paris : Airlait Recherches: Tec et Doc, Lavoisier, 1998),

La mesure de cet indice consiste classiquement à mesurer le temps nécessaire à une certaine quantité de poudre pour pénétrer dans l'eau à travers sa surface libre au repos. Selon Haugaard Sorensen et al. (1978), une poudre est dite « mouillable » si son IM (Indice de Mouillabilité) est inférieur à 20 secondes.

Il faut également associer à la mouillabilité, l'aptitude au gonflement de la poudre. En effet, lorsqu'une poudre absorbe de l'eau, elle gonfle progressivement. Puis, la structure de la poudre disparaît lorsque les divers constituants sont solubilisés ou dispersés.

Parmi les facteurs influençant la mouillabilité, il y a la présence de grosses particules primaires, la réintroduction des fines, la masse volumique de la poudre, la porosité et la capillarité des particules de poudre ainsi que la présence d'air, la présence de matières grasses à la surface des particules de poudre et les conditions de reconstitution.

Le test B mis au point par la société Demanderesse consiste ici à considérer plus particulièrement le comportement de la poudre de farine de microalgues lorsque mise en contact de l'eau, par la mesure, après un certain temps de contact, de la hauteur de la poudre qui décante lorsque placée à la surface de l'eau.

Le protocole de ce test est le suivant :
- dans un bécher de forme basse de 600 ml (bêcher FISCHERBRAND FB 33114), introduire 500 ml d'eau déminéralisée à 20°C,
- placer uniformément 25 g de la poudre de farine de microalgues à la surface de l'eau, sans mélanger,
- observer le comportement de la poudre après 3 h de contact,
- mesurer la hauteur du produit qui a pénétré la surface de l'eau et qui est décanté au fond du bêcher.

Une poudre très cohésive, collante, de faible mouillabilité demeurera à la surface du liquide, tandis qu'une poudre de meilleure mouillabilité, moins collante, décantera plus aisément.

Les granules de farine de microalgues présentent alors un degré de mouillabilité, exprimé selon ce test B, par la hauteur du produit décanté dans un bêcher, à une valeur comprise entre 0 et 4 cm, de préférence entre 0 et 2 cm, et plus préférentiellement entre 0 et 0,5 cm.

A titre comparatif, la farine de microalgues séchées classiquement par atomisation simple effet se maintient à la surface de l'eau, et ne s'hydrate pas suffisamment pour pouvoir décanter au fond du bêcher.

Les granules de farine de microalgues sont également caractérisés par :
- leur densité aérée,
- leur surface spécifique et
- leur comportement après dispersibilité dans l'eau.

La densité aérée est déterminée selon une méthode conventionnelle de mesure de la densité aérée, c'est-à-dire en mesurant la masse d'un récipient vide (en grammes) d'un volume connu, puis en mesurant la masse du même récipient rempli avec le produit à tester.

La différence entre la masse du récipient rempli et la masse du récipient vide, divisée par le volume (en ml) du récipient donne la valeur de la densité aérée.

Pour ce test, le récipient d'une contenance de 100 ml utilisé et le grattoir ainsi que l'appareil de mesure commercialisés par la société HOSOKAWA sous la marque POWDER TESTER type PTE, en appliquant la méthode recommandée dans les « operating Instructions » pour mesurer une densité aérée.

Dans ces conditions, les granules de farine de microalgues présentent une densité aérée comprise entre 0,30 et 0,50 g/ml.

Cette valeur de densité aérée est d'autant plus remarquable que les granules de farine de microalgues présentent une densité plus élevée que la farine de microalgues séchées par voie classique. En effet, il est admis que la densité d'un produit sera d'autant plus faible qu'il sera granulé par atomisation, par exemple inférieure à 0,30 g/ml.

Or, quoique granulés, ces produits présentent une densité aérée plus élevée qu'attendue.

Les granules de farine de microalgues peuvent également être caractérisés par leur surface spécifique.

On détermine la surface spécifique sur l'ensemble de la distribution granulométrique des granules de farine de microalgues grâce à un analyseur de surface spécifique Quantachrome basé sur un test d'absorption de l'azote sur la surface du produit soumis à l'analyse, réalisé sur appareil SA3100 de chez Beckmann Coulter, en suivant la technique décrite dans l'article BET Surface Area by Nitrogen Absorption de S. BRUNAUER et al. (Journal of American Chemical Society, 60, 309, 1938).

Les granules de farine de microalgues, après dégazage 30 minutes à 30°C sous vide, présentent alors une surface spécifique comprise entre 0,10 et 0,70 m²/g. A titre comparatif, la farine de microalgues séchées par atomisation classique présente une surface spécifique selon BET de 0,65 m²/g.

Il est donc surprenant de constater que les granules de farine de microalgues, plus denses que la farine de microalgues classique, présentent une surface spécifique d'autant plus faible que leur taille est élevée.

A la connaissance de la société Demanderesse, les propriétés particulières des granules de farine de microalgues n'ont jamais été décrites. Les granules de farine de microalgues décrits ci-dessus mais ne faisant pas partie de l'invention, se différencient alors aisément des farines de microalgues obtenues par simple atomisation.

Les granules de farine de microalgues sont susceptibles d'être obtenus par un procédé d'atomisation particulier, qui met en oeuvre des buses de pulvérisation à haute pression dans une tour à flux parallèles qui dirige les particules vers une bande mobile située dans le bas de la tour. La matière est ensuite transportée comme une couche poreuse à travers des zones de post-séchage et de refroidissement, qui lui donnent une structure craquante, comme celle d'un gâteau qui se brise à l'extrémité de la bande. La matière est ensuite mise en oeuvre pour obtenir la taille de particules souhaitée. Pour procéder à la granulation de la farine d'algues, en suivant ce principe d'atomisation, on peut employer par exemple un atomiseur FILTERMAT^{™} commercialisé par la société GEA NIRO ou un système de séchage TETRA MAGNA PROLAC DRYER^{™} commercialisé par la société TETRA PAK. De manière surprenante et inattendue, la société Demanderesse a ainsi constaté que la granulation de la farine de microalgues par la mise en oeuvre par exemple de ce procédé FILTERMAT^{™}, permettait non seulement de préparer avec un haut rendement un produit conforme sur le plan de la distribution granulométrique et de son aptitude à l'écoulement, mais aussi de lui conférer des propriétés inattendues de mouillabilité sans qu'il ne soit utile d'utiliser d'agents liant de granulation, ni d'agents anti-mottant (bien qu'ils puissent être optionnellement employés). En effet, les procédés décrits antérieurement (telle l'atomisation simple effet) ne permettent pas d'obtenir l'ensemble des caractéristiques souhaitées.

Selon un mode de réalisation préféré, est décrit (mais ne fait pas partie de l'invention) le procédé de préparation des granules de farine de microalgues comprenant alors les étapes suivantes :
1) préparer une émulsion de farine de microalgues à une matière sèche comprise entre 15 et 40 % en poids sec,
2) introduire cette émulsion dans un homogénéisateur haute pression,
3) la pulvériser dans un atomiseur vertical équipé d'une bande mobile à sa base, et d'une buse haute pression à sa partie supérieure, tout en réglant :
   a) la pression appliquée au niveau des buses de pulvérisation à des valeurs de plus de 100 bars, de préférence entre 100 et de 200 bars, et de préférence encore entre 160 et 170 bars,
   b) la température d'entrée comprise entre 150°C et 250°C, de préférence entre 180°C et 200°C, et
   c) la température de sortie dans cette zone d'atomisation comprise entre 60°C et 120°C, de préférence entre 60°C et 110°C et de préférence encore entre 60°C et 80°C,
4) régler les températures d'entrée de la zone de séchage sur la bande mobile entre 40°C et 90°C, de préférence entre 60°C et 90°C, et la température de sortie entre 40°C et 80°C, et régler les températures d'entrée de la zone de refroidissement à une température entre 10°C et 40°C, de préférence entre 10°C et 25°C, et la température de sortie entre 20°C et 80°C, de préférence entre 20°C et 60°C,
5) collecter les granules de farine de microalgues ainsi obtenus.

La première étape du procédé consiste à préparer une suspension de farine de microalgues, de préférence une farine de microalgues riche en lipides (par exemple de 30% à 70% de préférence de 40% à 60% de lipide par poids sec cellulaire), dans de l'eau à une matière sèche comprise entre 15 et 40 % en poids sec.

Selon un mode préférentiel de mise en oeuvre du procédé de production de la farine de microalgues, on obtient en fin de fermentation, une biomasse pouvant être à une concentration comprise entre 130g/l et 250 g/l, avec une teneur en lipides d'environ 50% en poids sec, une teneur en fibres de 10% à 50% en poids sec, une teneur en protéines de 2% à 15 % en poids sec, et une teneur en sucres inférieure à 10% en poids. Selon un autre mode de mise en oeuvre du procédé de production de la farine de microalgues, on obtient en fin de fermentation une biomasse pouvant être à une concentration comprise entre 130g/l et 250 g/l, avec une teneur en protéines d'environ 50% en poids sec, une teneur en fibres de 10% à 50% en poids sec, une teneur en lipides de 10% à 20% en poids sec, et une teneur en sucres inférieure à 10% en poids.

La biomasse extraite du milieu de fermentation par tout moyen connu de l'homme du métier est ensuite :
- concentrée (par exemple par centrifugation)
- optionnellement conservée par l'addition de conservateurs standards (benzoate de sodium et sorbate de potassium par exemple),
- broyée cellulairement.

L'émulsion peut ensuite être homogénéisée. Cette homogénéisation haute pression de l'émulsion peut être accomplie dans un dispositif à deux étages, par exemple un homogénéisateur GAULIN commercialisé par la société APV, avec une pression de 100 à 250 bars au premier étage, et 10 à 60 bars au second étage.

La suspension de farine ainsi homogénéisée est ensuite pulvérisée dans un atomiseur vertical équipé d'une bande mobile à sa base, et d'une buse haute pression à sa partie supérieure. La pression appliquée au niveau des buses de pulvérisation est réglée à des valeurs de plus de 100 bars, de préférence entre 100 et de 200 bars, et de préférence encore entre 160 et 170 bars, la température d'entrée est réglée de façon à être comprise entre 150°C et 250°C, de préférence entre 180°C et 200°C, et la température de sortie dans cette zone d'atomisation est réglée de façon à être comprise entre 60°C et 120°C, de préférence entre 60°C et 110°C et de préférence encore entre 60°C et 80°C.

La bande mobile permet de déplacer le matériel à travers des zones de post-séchage et de refroidissement. La températures d'entrée de la zone de séchage sur la bande mobile est réglée entre 40°C et 90°C, de préférence entre 60°C et 90°C, et la température de sortie de la zone de séchage est réglée entre 40°C et 80°C, et la température d'entrée de la zone de refroidissement est réglée entre 10°C et 40°C, de préférence entre 10°C et 25°C, et la température de sortie de la zone de refroidissement est réglée entre 20°C et 80°C, de préférence entre 20°C et 60°C.

La pression appliquée et la température d'entrée de la zone de séchage sont des paramètres importants pour la détermination de la texture du gâteau au niveau la bande mobile et ont donc un impact sur la distribution de la taille des particules.

Les granules de farine de microalgues selon les conditions de l'étape précédente du procédé tombent sur la bande mobile avec une humidité résiduelle comprise entre 2 et 4 %.

Pour amener le degré d'humidité des granules de farine de microalgues à la valeur souhaitée inférieure à 4%, et plus préférentiellement inférieur à 2%, la société Demanderesses a trouvé qu'il fallait respecter ces barèmes de température des zones de séchage et de refroidissement. Optionnellement, un antioxydant (de type Butylhydroxyanisol (BHA), Butylhydroxytoluène (BHT), ou d'autres connus pour une utilisation alimentaire) peuvent être ajoutés avant l'étape de séchage pour préserver la fraîcheur et la conservation.

La dernière étape du procédé consiste enfin à collecter les granules de farine de microalgues ainsi obtenus.

Sont décrits mais ne font pas partie de l'invention les granules de farine de microalgues tels que définis ci-dessus ou tel qu'obtenus par la mise en oeuvre du procédé décrit ci-dessus.

Ces granules de farine de microalgues contiennent au moins 10% en poids sec de lipides, de préférence au moins 12% et encore plus préférentiellement de 25 à 35% ou plus en poids sec de lipides.

Ces granules de farine de microalgues contiennent au moins 25% de lipides, ou au moins 55% de lipides exprimés en poids sec.

Les granules de farine de microalgues obtenus selon le procédé décrit ci-dessus sont susceptibles de contenir une mixture de cellules de microalgues intactes et de cellules broyées ou principalement des cellules de microalgues broyées.

Dans un mode de réalisation de la présente invention, une lyse non poussée est souhaitée, c'est-à-dire que le pourcentage de cellules intactes contenues dans les granules de la farine de microalgues est compris entre 25% à 75%.

Selon un autre mode de réalisation de l'invention, une lyse partielle est souhaitée, c'est-à-dire de 25% à 75% de cellules lysée présentes dans la farine de microalgues.

Selon un autre mode de réalisation de l'invention, une lyse totale est souhaitée, c'est-à-dire que la farine de microalgues contient 85% ou plus des cellules lysée, de préférence 90% ou plus.

Ainsi selon les applications souhaitées, on choisira une farine de microalgues possédant un taux plus ou moins élevé de cellules lysées.

La farine de microalgues est sous la forme de granules de farine de microalgues. Lesdits granules sont produits selon le procédé tel que décrit ci-dessus.

Ainsi la farine de farine de microalgues peut être utilisée en tant qu'ingrédient dans des produits de panification destinés à être cuits avant leur consommation. Il est en effet du mérite de la Demanderesse d'avoir découvert qu'une farine de microalgues sous forme de granules tels que définis dans le présent document pouvait, de façon surprenante et inattendue par rapport aux prérequis de l'art antérieur, remplacer avantageusement les oeufs ou ovoproduits, le lait ou produits dérivés du lait et les matières grasses d'origine animale et/ou végétale dans des produits de panification, tout en conservant les qualités organoleptiques, en particulier gustatives, olfactives, visuelles et tactiles, au moins équivalentes voire supérieures, à celles des produits de cuisson traditionnels contenant ces ingrédients.

Au moins un des trois ingrédients choisi parmi les oeufs ou ovoproduits, le lait ou dérivés du lait et les matières grasses d'origine animale et/ou végétale est remplacé partiellement ou totalement par de la farine de microalgues sous forme de granules.

La présente invention est relative à l'utilisation de la farine de microalgues sous forme de granules telle que définie dans le présent document pour la préparation d'un produit cuit, de préférence un produit de panification. Facul-tativement, la farine de microalgues sous forme de granules est utilisée dans le produit de cuisson, de préférence de panification, en une teneur comprise entre 0,1 et 40%, plus préférentiellement entre 0,5% et 25% et encore plus préfé-rentiellement entre 1 et 10% de la masse totale des ingrédients mis en oeuvre dans la recette de préparation dudit produit de cuisson. De préférence, la farine de microalgues remplace totalement ou partiellement au moins un, deux ou trois des trois ingrédients choisis parmi les oeufs ou ovoproduits, le lait ou dérivés du lait et les matières grasses d'origine animale et/ou végétale.

Le procédé de production d'un produit de cuisson est caractérisé en ce qu'il comprend l'ajout aux ingrédients du produit de cuisson de la farine de microalgues sous forme de granules tels que décrits dans le présent document. De préférence, il contient de la farine de microalgues sous forme de granules en substitution partielle ou totale d'au moins un des trois ingrédients choisi parmi les oeufs ou ovoproduits, le lait ou dérivés du lait et les matières grasses d'origine animale et/ou végétale, de préférence de deux des ingrédients et facultativement des trois.

Ledit procédé est caractérisé en ce qu'il comporte les étapes suivantes :
- mélange des différents ingrédients jusqu'à l'obtention d'une pâte ; et
- cuisson de ladite pâte.

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### EXEMPLES

### Exemple 1 : Production de la farine de microalgues

Une souche de *Chlorella protothecoides* reférénce UTEX 250, est cultivée dans un fermenteur et selon des techniques connues de l'homme du métier, de façon à ce qu'elle ne produise pas de pigment chlorophyllien. La biomasse résultante est ensuite concentrée de façon à obtenir une concentration finale en cellules de microalgues de 150g/l.

Les cellules sont éventuellement désactivées par traitement thermique à travers une zone HTST à 85°C pendant 1 minute.

Pour la suite des opérations, la température peut être maintenue sous 8-10°C.

Puis la biomasse lavée est broyée à l'aide d'un broyeur à billes pouvant être de type « bead mill » et plusieurs taux de broyage, notamment de lyse sont alors recherchés : 50% de broyage et 85% de broyage.

Dans un des modes de réalisation, aucun broyage n'est appliqué et le taux de broyage est ainsi nul.

La biomasse ainsi générée et éventuellement broyée peut ensuite être pasteurisée sur une zone HTST (1 minute à 70-80°C) et homogénéisée sous pression dans un homogénéisateur GAUVIN à deux étages (250 bars au 1er étage / 50 bars au second) après ajustement du pH à 7 à la potasse.

Quatre lots de farine de microalgues sont ainsi obtenus :
- lot 0% : aucun broyage n'est appliqué (lot comparatif) ;
- lot 50% : le taux de lyse des cellules après broyage est de 50% ;
- lot 85% : le taux de lyse des cellules après broyage est de 85% ;
- lot 95% : le taux de lyse des cellules après broyage est de 95%.

Selon les conditions de culture appliquées, la teneur lipidique de la biomasse de microalgues est supérieure à 35%, et la teneur en protéines inférieure à 20%.

### Exemple 2 : Séchage de l'émulsion « huile dans eau » homogénéisée de farine de microalgues

On procède au séchage des trois lots de biomasse obtenue dans l'exemple 1 dans un dispositif FILTERMAT, pour obtenir les granules de farine de microalgues.

Le procédé d'atomisation consiste à pulvériser la suspension homogénéisée à haute pression dans un dispositif de type FILTERMAT commercialisé par la société GEA/NIRO, muni d'une buse d'injection haute pression de type DELAVAN, dans les conditions suivantes :
- la pression est réglée de 160 à 170 bars,
- température d'entrée d'atomisation : 180°C à 200°C,
- température de sortie : 60°C à 80°C,
- température d'entrée de la zone de séchage : 60°C à 90°C,
- température de sortie : 65°C,
- température d'entrée de la zone de refroidissement : 10°C à 20°C

La poudre arrive alors sur la bande avec une humidité résiduelle comprise entre 2 et 4 %. En sortie de bande : les granules de farines de microalgues présentent une humidité résiduelle comprise entre 1 et 3 %, de l'ordre de 2 %.

### Exemple 3 : Impact du taux de broyage de la farine de microalaues dans une application brioches

Les trois lots de farine de microalgues produits selon l'exemple 2 ont été testés dans une application brioche de façon à mesurer l'impact du broyage sur le produit fini.

Les farines de microalgues à différents taux de broyage ont été comparées à une farine où la lyse était presque totale, supérieure à 95%.

Les recettes sont données dans le tableau 1 ci-dessous. Il n'y a pas eu de modification dans la recette (même taux d'incorporation et même hydratation de la pâte). Seul le temps de pétrissage a été adapté aux différents produits, afin de former des pâtes « comparables ».

**Composition des brioches : Tableau 1**

| | **Farine de microalgues** 0% broyage | | **Farine de microalgues** 50% broyage | | **Farine de microalgues** 85% broyage | | **Farine de microalgues** 95% broyage | |
|---|---|---|---|---|---|---|---|---|
| | **g** | **%** | **g** | **%** | **g** | **%** | **g** | **%** |
| Farine de blé | 970,0 | 47,6% | 970,0 | 47,6% | 970,0 | 47,6% | 970,0 | 47,6% |
| Gluten de blé | 30,0 | 1,5% | 30,0 | 1,5% | 30,0 | 1,5% | 30,0 | 1,5% |
| Farine de microalgues | 150,0 | 7,4% | 150,0 | 7,4% | 150,0 | 7,4% | 150,0 | 7,4% |
| Sucrose | 100,0 | 4,9% | 100,0 | 4,9% | 100,0 | 4,9% | 100,0 | 4,9% |
| Prefera SSL 600 | 5,0 | 0,2% | 5,0 | 0,2% | 5,0 | 0,2% | 5,0 | 0,2% |
| Lametop 300 | 3,0 | 0,1% | 3,0 | 0,1% | 3,0 | 0,1% | 3,0 | 0,1% |
| Acide ascorbique | 0,1 | 0,0% | 0,1 | 0,0% | 0,1 | 0,0% | 0,1 | 0,0% |
| Nutrisoft 55 | 0,1 | 0,0% | 0,1 | 0,0% | 0,1 | 0,0% | 0,1 | 0,0% |
| Sel | 20,0 | 1,0% | 20,0 | 1,0% | 20,0 | 1,0% | 20,0 | 1,0% |
| Maltodextrine Glucidex 2 | 34,0 | 1,7% | 34,0 | 1,7% | 34,0 | 1,7% | 34,0 | 1,7% |
| Levure sèche | 15,0 | 0,7% | 15,0 | 0,7% | 15,0 | 0,7% | 15,0 | 0,7% |
| Lait écrémé en poudre | 20,0 | 1,0% | 20,0 | 1,0% | 20,0 | 1,0% | 20,0 | 1,0% |
| Sirop de glucose Flolys E7081S | 70,0 | 3,4% | 70,0 | 3,4% | 70,0 | 3,4% | 70,0 | 3,4% |
| Eau à 4°C | 620,0 | 30,4% | 620,0 | 30,4% | 620,0 | 30,4% | 620,0 | 30,4% |
| | **2037,2** | **100%** | **2037,2** | **100%** | **2037,2** | **100%** | **2037,2** | **100%** |

### Améliorants utilisés:

Prefera SSL6000 : émulsifiant de type Sodium Stearoyl Lactate
Nutrisoft 55: émulsifiant de type monoglycéride
Lametop 300: DATEM (diacetyl tartaric acid ester) de mono et diglycerides
   Ces trois améliorants sont commercialisés par la société BASF Chemtrade GmbH, Burgbernheim, Allemagne.

Les maltodextrines Glucidex2 et le sirop de glucose Flolys E7081S sont fabriqués et commercialisés par la société Demanderesse.

### Protocole de préparation des brioches

- Introduire les différents ingrédients dans le pétrin.
- Pétrissage pendant 2 minutes en vitesse 1, puis de 12 minutes à 19 minutes en vitesse 2. Le taux de pétrissage en vitesse 2 est adapté de façon à obtenir des pâtes comparables en sortie de pétrissage. Ainsi, pour la farine de microalgues non broyée, il est de 12 minutes ; pour celle broyée à 50%, il est de 13 minutes ; pour celle broyée à 85%, il est de 15 minutes ; et pour celle broyée à 95%, il est de 17 minutes.
- Pointage pendant 20 minutes.
- Découpage, pesée (pâton de 500 gr) et façonnage.
- Détente des pâtons pendant 20 minutes.
- Mise en forme des pâtons.
- Apprêt ou pousse en étuve à 28°C, 80% HR pendant 2h30.
- Cuisson sur four à sole à 180°C pendant 30 minutes.

**Analyse des produits finis : Tableau 2**

| | **Farine de microalgues** 0% broyage | **Farine de microalgues** 50% broyage | **Farine de microalgues** 85% broyage | **Farine de microalgues** 95% broyage |
|---|---|---|---|---|
| Hauteur (cm) | 10,5 | 11,2 | 13,3 | 13,5 |
| Poids(g) | 447,9 | 441,0 | 431,4 | 430,3 |
| Eau perdue pendant la cuisson (%) | 10,4% | 11,8% | 13,7% | 13,9% |
| Densité (g) (3 tranches de 50mm diamètre) | 12,5 | 11,5 | 8,8 | 8,0 |
| Volume calculé (cm³) | **2101** | **2156** | **2888** | **2965** |
| Moelleux J+1 (N) | 3,5 | 2,4 | 1,2 | 1,1 |
| Moelleux J+3 (N) | 4,3 | 2,8 | 1,3 | 1,1 |
| Moelleux J+7 (N) | 6,2 | 4,2 | 2,4 | 1,3 |
| aw J+1 | 0,94 | 0,95 | 0,95 | 0,95 |
| aw J+3 | 0,94 | 0,95 | 0,94 | 0,94 |
| aw J+7 | 0,94 | 0,94 | 0,95 | 0,94 |
| %H₂0 J+1 | 37,5 | 37,5 | 37,2 | 37,6 |
| %H₂0 J+3 | 36,8 | 36,1 | 34,3 | 35,3 |
| %H₂0 J+7 | 35,3 | 36,8 | 36,1 | 34,3 |

Ces essais démontrent qu'il est tout à fait possible de réaliser des recettes de brioches en utilisant de la farine de microalgues avec des taux de broyage différents.

Certains paramètres sont dépendants du taux de broyage. En effet, alors que le taux de broyage augmente :
- le volume augmente également, indiquant une meilleure pousse de la brioche. Néanmoins, des volumes tout à fait satisfaisants sont obtenus à la fois lorsque les cellules de microalgues ne sont pas broyées ou lorsqu'elles ne sont broyées qu'à 50%.
- Les pertes en eau à la cuisson augmentent, ce qui signifie que les cellules de microalgues non broyées ont des capacités de rétention d'eau supérieure aux cellules de microalgues broyées.
- La densité diminue avec le taux de broyage, ce qui est logique car elle est corrélée à la souplesse et au moelleux de la brioche. Plus le taux de broyage est important et plus la brioche est gonflée et donc moelleuse. Le caractère moelleux est inversement proportionnel à la dureté mesurée en Newton et indiqué dans le tableau ci-dessus sous la dénomination moelleux.

D'autres résultats ne semblent pas corrélés au taux de broyage. Ainsi l'évolution de la teneur en eau des produits finis ne suit aucune logique. Les activités de l'eau des brioches au cours du temps évoluent très peu.

### Analyse sensorielle des produits finis

8 personnes ont participé à l'évaluation sensorielle des brioches élaborées avec de la farine de microalgues à différents taux de broyage.

Les quatre brioches ont été jugées bonnes, même si les deux essais où la farine de microalgues était broyée à 85% et 95% ont été jugés comme étant les meilleurs, en terme de moelleux. Notons qu'il n'y a pas de différence significative entre les 2 brioches élaborées avec ces deux taux de broyage élevés.

En conclusion, il apparait que le taux de broyage a un impact sur la texture de la brioche. Plus le taux de broyage est élevé, plus la brioche est moelleuse et aérée.

Cela dit, de tels essais démontrent qu'il est tout à fait possible de réaliser des brioches dans lesquelles la farine de microalgues n'a pas été broyée.

En fonction du positionnement marketing du produit final, il peut être intéressant du point de vue économique de s'affranchir de l'étape de broyage qui est une étape coûteuse dans le procédé de préparation de la farine de microalgues.

Afin de corriger la densité de la brioche avec farine de microalgues non broyée, il faut peut-être corriger l'hydratation de la pâte pour assouplir cette dernière et conférer le caractère moelleux au produit final cuit. C'est ce qui a été réalisé dans l'exemple 4 suivant.

### Exemple 4 : Impact du taux de broyage de la farine de microalgues dans une application brioches - Comparaison entre 0% et 85% de taux de broyage (0% de broyage = test comparatif)

Dans l'exemple 3, les brioches contenant de la farine de microalgues donnaient une pâte plutôt ferme qui semblait manquer d'hydratation et donc résultait en des produits finaux cuits avec moins de moelleux.

La Demanderesse a donc réalisé de nouveaux essais en corrigeant l'hydratation des pâtes. Plusieurs taux d'hydratation de la pâte avec farine d'algues non broyée ont été réalisés et les meilleurs résultats sont ceux obtenus pour un taux d'hydratation de 78%.

**Composition des brioches : Tableau 3**

| | **Farine de microalgues 85% broyage** | | **Farine de microalgues 0% broyage** | |
|---|---|---|---|---|
| | **g** | **%** | **g** | **%** |
| Farine de blé | 970,0 | 47,6% | 970,0 | 44,1% |
| Gluten de blé | 30,0 | 1,5% | 30,0 | 1,4% |
| Farine de microalgues | 150,0 | 7,4% | 150,0 | 6,8% |
| Sucrose | 100,0 | 4,9% | 100,0 | 4,6% |
| Prefera SSL 600 | 5,0 | 0,2% | 5,0 | 0,2% |
| Lametop 300 | 3,0 | 0,1% | 3,0 | 0,1% |
| Acide ascorbique | 0,1 | 0,0% | 0,1 | 0,0% |
| Nutrisoft 55 | 0,1 | 0,0% | 0,1 | 0,0% |
| Sel | 20,0 | 1,0% | 20,0 | 0,9% |
| Maltodextrine Glucidex 2 | 34,0 | 1,7% | 34,0 | 1,5% |
| Levure sèche | 15,0 | 0,7% | 15,0 | 0,7% |
| Lait écrémé en poudre | 20,0 | 1,0% | 20,0 | 0,9% |
| Sirop de glucose Flolys E70815S | 70,0 | 3,4% | 70,0 | 3,2% |
| Eau à 4°C | **620,0** | **30,4%** | **780,0** | **35,5%** |
| | **2037,2** | **100%** | **2197,2** | **100%** |

Le protocole de préparation est identique que celui décrit dans l'exemple 3. Le pétrissage est réalisé pendant 2 minutes en vitesse 1, puis en vitesse 2 pendant 15 minutes pour les cellules de farine de microalgues broyées à 85% et pendant 12 minutes pour la farine de microalgues non broyée.

Les résultats sur les produits cuits sont tout à fait satisfaisants et le fait d'avoir augmenté le taux d'hydratation permet d'obtenir une pâte présentant une texture acceptable et similaire à la texture de la brioche préparée avec la farine de microalgues broyée à 85%.

Cette très forte augmentation d'hydratation permet d'obtenir une pâte à la texture proche (au niveau de la force de la pâte, de sa souplesse) de la pâte réalisée avec une farine de microalgues broyée à 85%.

Cet exemple démontre qu'en jouant sur le taux d'hydratation de la pâte, on obtient des brioches présentant un moelleux et une souplesse tout à fait satisfaisants.

Un autre exemple non présenté ici a démontré qu'en jouant à la fois sur le taux d'hydratation et sur la quantité de gluten, la qualité des brioches était encore améliorée, et plus particulièrement sur les brioches contenant de la farine de microalgues non broyée. Ainsi, dans les brioches contenant de la farine peu (50%) ou pas broyée (0%) et en ajoutant respectivement 0,5% et 1% de gluten en plus, on augmentait encore la souplesse de la pâte et le moelleux final.

### Exemple 5 : Substitution des ingrédients allergènes et/ou calorique dans des brioches par de la farine de microalgues

Une première série d'essais a consisté en la suppression du lait écrémé en poudre dans des brioches par de la farine de microalgues de façon à retirer cet ingrédient allergène de la formule.

La farine utilisée est celle produite dans l'exemple 2 avec un taux de broyage de 85%.

Une brioche contrôle est réalisée contenant du lait en poudre et ne contenant pas de farine de microalgues.

Puis une formule de brioche contenant du lait en poudre et de la farine de microalgues est réalisée, c'est l'essai 1. Une troisième formule (Essai 2) consiste en une brioche sans lait et avec de la farine de microalgues, dans laquelle la part de lait en poudre retirée est remplacée par de la farine de blé. Il n'y a pas eu d'autre modification dans la recette entre l'essai 1 et l'essai 2, autre que cette substitution de lait écrémé et remplacement par de la farine de blé.

**Composition des brioches : Tableau 4**

| | **CONTRÔLE** | | **ESSAI 1** | | **ESSAI 2** | |
|---|---|---|---|---|---|---|
| | **Brioche contrôle avec lait sans farine de microalgues** | | **Brioche avec farine de microalgues et lait** | | **Brioche avec farine de microalgues sans lait** | |
| Farine de blé | 1120 | 55,9 | 970,0 | 48,3% | 990,0 | 49,3% |
| Gluten de blé | 30 | 1,5% | 30,0 | 1,5% | 30,0 | 1,5% |
| **Farine de microalgues** | **0** | **0** | **150,0** | **7,5%** | **150,0** | **7,5%** |
| Sucrose | 100 | 5,0% | 100,0 | 5,0% | 100,0 | 5,0% |
| Sirop de glucose Flolys E7081S | 70 | 3,5% | 70,0 | 3,5% | 70,0 | 3,5% |
| Sel | 20 | 1,0% | 20,0 | 1,0% | 20,0 | 1,0% |
| Maltodextrine Glucidex 2 | 30 | 1,5% | 30,0 | 1,5% | 30,0 | 1,5% |
| Levure sèche | 15 | 0,7% | 15,0 | 0,7% | 15,0 | 0,7% |
| Lametop 300 | 3 | 0,1% | 3,0 | 0,1% | 3,0 | 0,1% |
| Prefera SSL 600 | 5 | 0,2% | 5,0 | 0,2% | 5,0 | 0,2% |
| **Lait écrémé en poudre** | **20** | **1,0%** | **20,0** | **1,0%** | **0,0** | **0,0%** |
| Eau à 4°C | 595 | 29,6% | 595,0 | 29,6% | 595,0 | 29,6% |
| | **2008** | **100%** | **2008** | **100%** | **2008** | **100%** |

### Protocole de préparation des brioches

- Introduire les différents ingrédients dans le pétrin.
- Pétrissage pendant 2 minutes en vitesse 1, puis pendant 15 minutes en vitesse 2.
- Pointage pendant 20 minutes.
- Découpage, pesée (pâtons de 500 gr) et façonnage.
- Détente des pâtons pendant 20 minutes.
- Mise en forme des pâtons.
- Apprêt ou pousse en étuve à 28°C, 80% HR pendant 2h00.
- Cuisson sur four à sole à 215°C pendant 23 minutes.

Au niveau du pétrissage, pour l'essai 1 la pâte se forme de façon classique. Elle est souple et bien manipulable. Pour l'essai 2, aucune différence n'est notée. La pâte est également bien souple et bien manipulable.

**Analyse des produits finis : Tableau 5**

| | **Brioche control avec lait sans farine de microalgues** | **Brioche avec farine de microalgues et lait** | **Brioche avec farine de microalgues sans lait** |
|---|---|---|---|
| Aw (J+1) | 0,938 | 0,934 | 0,931 |
| %H₂O | 36,8% | 38% | 34,7% |
| Hauteur (cm) | 10,11 | 9,23 | 10,27 |
| Poids(g) | 446,8 | 448,9 | 444,6 |
| Eau perdue pendant la cuisson (%) | 10,6% | 10,2% | 11,% |
| Volume calculé (cm³) | 1854,25 | 1766,6 | 1973,3 |
| Texture | **AUCUNE DIFFERENCE DE TEXTURE** | | |

Les deux formules contenant de la farine de microalgues se rapprochent fortement de la formule contrôle qui contient du lait mais pas de farine de microalgues.

Si l'on compare l'essai 1 et l'essai 2, on peut dire qu'aucune différence significative n'est observée. Néanmoins, le volume moyen mesuré sur les brioches sans lait est plus important (d'environ 10%). La perte d'eau pendant la cuisson, le volume et le pourcentage d'eau dans le produit fini semblent être corrélés avec une légère augmentation du volume de la brioche sans lait et pourraient s'expliquer par une évaporation plus grande pendant la cuisson. Les différences observées sont minimes et non représentatives.

Les trois brioches obtenues selon les recettes ci-dessus mettant en oeuvre la farine de microalgues en remplacement du lait ont également été goutées par un panel de dégustateurs, et leur goût a été jugé très satisfaisant et agréable. Leur texture a été notée comme étant souple et moelleuse.

Il est donc tout à fait envisageable de supprimer définitivement cet allergène de la formule de brioche sans en impacter ni la fabrication ni les qualités organoleptiques finales.

### Exemple 6 : Substitution partielle des matières grasses pour une réduction de la charge calorique dans une formule de cakes

Les trois lots de farine de microalgues à 0, 50 et 85 % de broyage produits selon l'exemple 2 ont été testés dans une application cake pour une réduction de la teneur en matière grasse et une réduction de la charge calorique. Les matières grasses utilisées sont de type végétales et sont de l'huile de colza (ou canola).

Un quatrième essai a également été réalisé avec une farine de microalgues possédant un taux de broyage de 95%.

Les recettes sont données dans le tableau 6 ci-dessous. Elles ont été les mêmes quelques soient les taux de broyage de la farine de microalgues utilisée.

**Composition des cakes : Tableau 6**

| | | **Contrôle** | | **Farine de microalgues** | |
|---|---|---|---|---|---|
| | | **g** | **%** | **g** | **%** |
| A | Farine de blé | 250,0 | 25,0% | 250,0 | 25,0% |
| | **Farine de microalgues** | 0,0 | 0,0% | **15,0** | **1,5%** |
| | Sucrose | 160,0 | 16,0% | 160,0 | 16,0% |
| | Lait écrémé en poudre | 36,0 | 3,6% | 36,0 | 3,6% |
| | Lait entier en poudre | 25,0 | 2,5% | 25,0 | 2,5% |
| | Spongolit 283 *émulsifiant* | 8,0 | 0,8% | 8,0 | 0,8% |
| | Levure chimique *Volcano* | 6,0 | 0,6% | 6,0 | 0,6% |
| | Sel | 3,0 | 0,3% | 3,0 | 0,3% |
| B | Sirop de glucose Flolys E7081S | 160,0 | 16,0% | 160,0 | 16,0% |
| | Œufs entiers liquides | 160,0 | 16,0% | 160,0 | 16,0% |
| | Eau | 52,0 | 5,2% | 77,0 | 7,7% |
| | Extrait de vanille | 10,0 | 1,0% | 10,0 | 1,0% |
| | Glycérine | 50,0 | 5,0% | 50,0 | 5,0% |
| | Huile de canola (colza) | 80,0 | 8,0% | **40,0** | **4,0%** |
| | | **1000,0** | **100%** | **1000,0** | **100%** |

La levure chimique Volcano est commercialisée par la société Puratos, industrialaan 25, 1702 Groot-Bijgaarden, Belgique.

L'émulsifiant pour cake Spongolit 283 est commercialisé par la société BASF Chemtrade GmbH, Burgbernheim, Allemagne.

### Protocole de préparation des brioches

- Mélanger entre elles les différentes poudres du groupe A.
- Placer les ingrédients du groupe B dans le bol du mixeur et y ajouter le mélange des poudres issues du groupe A.
- Mixer le taux pendant 30 secondes en vitesse 1, puis pendant 3 minutes en vitesse 2 et enfin pendant 30 secondes en vitesse 3
- Placer la pâte dans un moule en aluminium graissé (235 g).
- Cuisson dans un four à 170°C pendant 27 minutes.

**Analyse des produits finis : Tableau 7**

| | **Contrôle** | **Farine de microalgues** |
|---|---|---|
| Calories (kCal/kJ) | 397 kCal / 1659 kJ | 371 kCal / 1553 kJ |
| Protéines | 7,4 | 7,6 |
| **Matières grasses** | **11,9** | **8,3** |
| Carbohydrates | 56,3 | 57,7 |
| *...parmi lesquels DP1,2* | 31,9 | 32,7 |
| Fibres | 0,5 | 0,8 |
| ... *fibres insolubles* | *0,5* | *0,8* |
| ... *fibre soluble* | *0,0* | 0,0 |
| Glycérine | 5,5 | 5,6 |
| **Réduction de la matière grasse** | | **30,6%** |
| **Réduction calorique** | | **6,5%** |

Ainsi la recette de cakes contenant de la farine de microalgues, et ce quel que soit le taux de broyage, permet une réduction de 30% de la matière grasse dans le produit fini.

De plus, les deux types de cakes ont été goutés à l'aveugle par un panel de dégustateurs, et leur goût a été jugé très satisfaisant et agréable. Aucune différence en termes de texture, de moelleux, de goût n'a été mise en évidence.

Le même style de substitution a été testé dans des recettes de muffins et a donné les mêmes résultats. Des muffins tout aussi délicieux ont été réalisés avec des substitutions de 30% de matière grasse.

### Exemple 7 : Substitution totale des oeufs ou ovoproduits, du lait ou dérivés du lait et des matières grasses d'origine animale et/ou végétale dans une recette de brioche

Dans ce dernier exemple, tous les ingrédients de type oeufs ou ovoproduits, lait ou dérivés du lait et matières grasses d'origine animale et/ou végétale ont été substitués en totalité par de la farine de microalgues dans des recettes de brioches.

Pour cet essai, la farine de microalgues est broyée à 85%.

**Composition des brioches: Tableau 8**

| | **Contrôle** | | **Farine de microalgues** | |
|---|---|---|---|---|
| | **g** | **%** | **g** | **%** |
| Farine de blé | 970,0 | 47,9% | 970,0 | 47,9% |
| Gluten de blé | 30,0 | 1,5% | 30,0 | 1,5% |
| **Farine de microalgues** | **0** | **0,0%** | **490** | **24,2%** |
| Sucrose | 100,0 | 4,9% | 100,0 | 4,9% |
| Sirop de glucose Flolys E7081S | 70,0 | 3,5% | 70,0 | 3,5% |
| Sel | 20,0 | 1,0% | 20,0 | 1,0% |
| Maltodextrine Glucidex 2 | 30,0 | 1,5% | 30,0 | 1,5% |
| Levure sèche | 15,0 | 0,7% | 15,0 | 0,7% |
| **Lait écrémé en poudre** | **20,0** | **1,0%** | **0** | **0,0%** |
| Nutrilife AM17 | 0,2 | 0,0% | 0,2 | 0,0% |
| Acide ascorbique | 0,2 | 0,0% | 0,2 | 0,0% |
| Lametop 300 | 3,0 | 0,1% | 3,0 | 0,1% |
| Prefera SSL 6000 | 5,0 | 0,2% | 5,0 | 0,2% |
| Extrait de vanille | 15,0 | 0,7% | 15,0 | 0,7% |
| **Beurre à 82% de matières grasses** | **270,0** | **13,3%** | **0** | **0,0%** |
| Eau à 4°C | 230,0 | 11,4% | 275,0 | 13,7% |
| **Œufs entiers** | **245,0** | **12,1%** | **0** | **0,0%** |
| | **2023,4g** | **100%** | **2023,4g** | **100%** |

### Protocole de préparation des brioches

- Introduire les différents ingrédients dans le pétrin.
- Pétrissage pendant 2 minutes en vitesse 1, puis de 12 minutes à 19 minutes en vitesse 2. Le taux de pétrissage en vitesse 2 est adapté de façon à obtenir des pâtes comparables en sortie de pétrissage. Ainsi pour le témoin, il est de 12 minutes et pour l'essai, il est de 15 minutes.
- Pointage pendant 20 minutes.
- Découpage, pesée (pâton de 500 gr) et façonnage.
- Détente des pâtons pendant 20 minutes.
- Mise en forme des pâtons.
- Apprêt ou pousse en étuve à 28°C, 80% HR pendant 2h30.
- Cuisson sur four à sole à 180°C pendant 30 minutes.

Les deux lots de pâtes se comportent de la même façon.

### Analyse des produits finis

Les deux brioches obtenues selon les recettes ci-dessus, la recette témoin et celle mettant en oeuvre la farine de microalgues en remplacement des oeufs ou ovoproduits, du lait ou dérivés du lait et des matières grasses d'origine animale et/ou végétale selon la présente invention ont été goutées par un panel de dégustateurs, et leur goût a été jugé très satisfaisant et agréable. Leur texture a été notée comme étant souple et moelleuse.

Il est donc tout à fait envisageable de supprimer définitivement les oeufs ou ovoproduits, le lait ou dérivés du lait et les matières grasses d'origine animale et/ou végétale de la formule de brioche sans en impacter ni la fabrication ni les qualités organoleptiques finales.

L'intérêt de la présente invention est ainsi démontré par les nombreux exemples ci-dessus.

## Revendications

1. Utilisation d'une farine de microalgues pour la préparation d'un produit cuit, de préférence un produit de panification, la farine comprenant des cellules au moins partiellement lysées sous forme de granules possédant les trois caractéristiques suivantes :
- une distribution granulométrique monomodale, mesurée sur un granulomètre laser LS de marque COULTER^{®}, comprise entre 2 et 400 µm, centrée sur un diamètre de particules (D mode) entre 5 et 15µm,
- des notes d'écoulement, déterminées selon un test A, comprises entre 0,5 et 60 % en poids pour le refus à 2.000 µm, comprises entre 0,5 et 60 % en poids pour le refus à 1.400 µm et comprises entre et 0,5 et 95 % en poids pour le refus à 800 µm, et
- un degré de mouillabilité, exprimé selon un test B, par la hauteur du produit décanté dans un bécher à une valeur comprise entre 0 et 4 cm, de préférence entre 0 et 2 cm, et plus préférentiellement entre 0 et 0,5 cm.

2. Utilisation selon la revendication 1 dans laquelle la farine de microalgues remplace totalement ou partiellement au moins un, deux ou trois des trois ingrédients choisis parmi les œufs ou ovoproduits, le lait ou dérivés du lait et les matières grasses d'origine animale et/ou végétale.

## Patentansprüche

1. Verwendung eines Mikroalgenmehls zur Herstellung einer Backware, vorzugsweise eines Brotprodukts, wobei das Mehl wenigstens teilweise lysierte Zellen in Form von Granulat umfasst, das die drei folgenden Merkmale besitzt:
- eine monomodale granulometrische Verteilung, gemessen auf einem Lasergranulometer LS der Marke COULTER^{®}, zwischen 2 und 400 µm, zentriert auf einen Partikeldurchmesser (Modalwert D) zwischen 5 und 15 µm,
- Fließgrade, bestimmt nach einem Test A, zwischen 0,5 und 60 Gew.-% für den Siebrückstand bei 2.000 µm, zwischen 0,5 und 60 Gew.-% für den Siebrückstand bei 1.400 µm und zwischen 0,5 und 95 Gew.-% für den Siebrückstand bei 800 µm, und
- einen Grad an Benetzbarkeit, ausgedrückt nach einem Test B, mithilfe der Höhe des abgesetzten Produkts in einem Becherglas mit einem Wert zwischen 0 und 4 cm; bevorzugt zwischen 0 und 2 cm und bevorzugter zwischen 0 und 0,5 cm.

2. Verwendung gemäß Anspruch 1, wobei das Mikroalgenmehl wenigstens eine, zwei oder drei von drei Zutaten, ausgewählt aus Eiern oder Eiprodukten, Milch oder Milchderivaten und Fetten tierischen und/oder pflanzlichen Ursprungs, vollständig oder teilweise ersetzt.

## Claims

1. Use of a microalgal flour for preparing a baked product, preferably a breadmaking product, the flour comprising at least partially lysed cells in the form of granules having the three following characteristics:
- a monomodal particle size distribution, measured on a Coulter^{®} LS laser particle size analyzer, between 2 and 400 µm, centered on a particle diameter (D mode) between 5 and 15 µm,
- flow grades, determined according to a test A, between 0.5 and 60% by weight for the oversize at 2 000 µm, between 0.5 and 60% by weight for the oversize at 1400 µm and between 0.5 and 95% by weight for the oversize at 800 µm, and
- a degree of wettability, expressed according to a test B, by the height of the product decanted in a beaker, at a value between 0 and 4 cm, preferably between 0 and 2 cm, and more preferably between 0 and 0.5 cm.

2. Use according to claim 1, wherein the microalgal flour totally or partially replaces at least one, two or three of the three ingredients chosen from eggs or egg products, milk or milk derivatives and fats of animal and/or vegetable origin.
